# EUROPÄISCHE PATENTSCHRIFT

(11) **EP 3 292 010 B1**
(45) Veröffentlichungstag und Bekanntmachung des Hinweises auf die Patenterteilung: **10.07.2019**
(21) Anmeldenummer: 16720120.1
(22) Anmeldetag: 03.05.2016
(51) Int. Cl.: B60J 5/04

(54) **MODULTRÄGER FÜR EIN TÜRMODUL EINER KRAFTFAHRZEUGTÜR UND HERSTELLUNGSVERFAHREN**
MODULE CARRIER FOR A DOOR MODULE OF A MOTOR VEHICLE DOOR AND METHOD OF PRODUCING THE SAME
SUPPORT DE MODULE POUR MODULE DE PORTE D'UN VÉHICULE AUTOMOBILE ET PROCÉDÉ DE FABRICATION

(30) Priorität: 05.05.2015 DE 102015005885; 10.09.2015 DE 102015217348
(43) Veröffentlichungstag der Anmeldung: 14.03.2018
(73) Patentinhaber: Brose Fahrzeugteile GmbH & Co. Kommanditgesellschaft, Bamberg, 96052 Bamberg (DE)
(72) Erfinder: FISCHER, Matthias, 96274 Itzgrund (DE); LEHNHARDT, André, 97483 Eltmann (DE); HÜMMER, Norman, 96250 Ebensfeld (DE); JAHN, Michael, 96148 Baunach (DE); HERZOG, Hans, 96129 Strullendorf (DE); THIENEL, Michael, 95349 Thurnau (DE); HOFMANN, Gerhard, 96049 Bamberg (DE); ASCHMUTAT, Raimund, 96271 Grub am Forst (DE); STAMMBERGER, Werner, 96271 Grub a. Forst (DE); BERNERT, Michael, 96257 Redwitz (DE)
(74) Vertreter: Maikowski & Ninnemann Patentanwälte Partnerschaft mbB
(86) Internationale Anmeldenummer: PCT/EP2016/059871
(87) Internationale Veröffentlichungsnummer: WO 2016/177716

(56) Entgegenhaltungen:
- DE-A1- 19 804 781
- DE-A1-102010 053 381
- DE-A1-102012 023 588
- DE-A1-102013 213 711

## Beschreibung

Die Erfindung betrifft einen Modulträger nach dem Oberbegriff des Anspruchs 1 sowie ein Herstellungsverfahren für einen Modulträger nach dem Oberbegriff des Anspruchs 29.

Ein derartiger Modulträger für ein Türmodul einer Kraftfahrzeugtür trägt üblicherweise mehrere Funktionselemente, wie zum Beispiel Teile eines Fensterhebers zur Verstellung einer Fensterscheibe der Kraftfahrzeugtür, wenigstens einen Lautsprecher oder Teile eines Türschließsystem. Es ist bekannt, einen derartigen Modulträger zu einem wesentlichen Teil durch ein Organoblech zu bilden und an einem umlaufenden äußeren Rand des Modulträgers wenigstens eine Dichtung anzuordnen, über die eine dichtende Verbindung des Modulträgers mit einer Türstruktur der Kraftfahrzeugtür erreichbar ist.

Dass der Modulträger zu einem wesentlichen Teil durch Organoblech gebildet ist, bedeutet dabei, dass das Organoblech denjenigen Teil des Modulträgers bildet, der den Großteil der unter normalen Betriebsbedingungen auftretenden Kräfte erfährt. Hierbei kann es sich insbesondere um den Teil des Modulträgers handeln, an dem eine oder mehrere Führungsschienen eines Fensterhebers vorgesehen sind. Ein (z.B. eine oder mehrere Führungsschienen tragender, zusammenhängender) Teil des Modulträgers aus Organoblech oder mehrere (z.B. eine oder mehrere Führungsschienen tragende) Teile des Modulträgers aus Organoblech erstrecken sich beispielsweise über etwa 30% oder mehr der Fläche des Modulträgers. Insbesondere kann sich das Organoblech über mehr als 40% und in der Regel über mindestens 50% der Fläche des Modulträgers erstrecken, so dass das Organoblech damit auch einen entsprechenden Anteil von mehr als 40% oder etwa 50% oder mehr der Oberfläche des Modulträgers bildet. Um die Festigkeitsvorteile des Organoblechs voll zu nutzen, wird man in der Regel versuchen, den Anteil des Organoblechs an der Fläche des Modulträgers zu maximieren. Eine mehrteilige Ausbildung des Organoblechs an einem Modulträger ist hierbei nicht ausgeschlossen.

Ein Hauptbestandteil des Modulträgers ist beispielsweise ein plattenförmiges Halbzeug, welches aus einem Organoblech besteht. Somit definiert das Organoblech eine wesentliche flächige Ausdehnung des Modulträgers, kann aber durch weitere Komponenten bzw. Materialien ergänzt sein. So können beispielsweise metallische Elemente und/oder Kunststoffelemente in das Organoblech eingearbeitet oder an dem Organoblech angebracht sein.

Bei dem Organoblech handelt es sich um einen endlosfaserverstärkten thermoplastischen Kunststoff, bei dem Endlosfasern in Form von Gelegen, Geweben oder Gestricken aus Glas-, Kevlar-, Kohle- oder Kunststofffasern in eine thermoplastische Matrix eingebettet sind. Als thermoplastischer Kunststoff für die Matrix eignet sich beispielsweise Polyamid aufgrund seiner guten Haftungseigenschaften zu den Fasern.

Unter der Charakterisierung "endlosfaserverstärkt" ist zu verstehen, dass die Länge der zur Verstärkung dienenden Fasern im Wesentlichen durch die Größe des plattenförmigen Organoblechs begrenzt ist. Innerhalb des Organoblechs ist eine Faser in der Regel nicht unterbrochen.

Üblicherweise sind an einem Modulträger für ein Türmodul mehrere Arten von Schnittstellen vorgesehen, die einerseits der Festlegung des Modulträgers an einer Türstruktur einer Kraftfahrzeugtür und andererseits der Verbindung der Funktionselemente und/oder weiterer Komponenten der Kraftfahrzeugtür mit dem Modulträger dienen. Derartige Schnittstellen werden beispielsweise durch Befestigungsöffnungen für die Fixierung des Modulträgers an einer Türstruktur definiert. Ebenso sind regelmäßig mehrere Befestigungsöffnungen, Schraubdome und/oder Lagerstellen und -flächen an dem Modulträger ausgebildet, die eine bestimmungsgemäße Verbindung von Funktionselementen und/oder mindestens einer weiteren Komponenten, wie zum Beispiel einer Türinnenverkleidung, an dem Modulträger ermöglichen. Ergänzend ist üblicherweise mindestens eine Durchgangsöffnung für ein Funktionselement an dem Modulträger ausgebildet. Durch eine solche Durchgangsöffnung hindurch kann dann beispielsweise eine mit einem Funktionselement gekoppelte Komponente oder ein Teil des Funktionselements selbst durch den Modulträger hindurch greifen oder sich durch den Modulträger hindurch erstrecken. Beispielsweise dient eine solche Durchgangsöffnung der Durchführung eines Betätigungsgestänges, eines Kabels oder einer (Antriebs-) Welle.

Bei einem Modulträger, der zu einem wesentlichen Teil durch Organoblech gebildet ist, kann die Ausbildung definierter Schnittstellen und/oder Durchgangsöffnungen durch das Organoblech selbst regelmäßig nur in gewissen Grenzen erfolgen, da durch eine lokale Umformung des Organoblechs Zugkräfte entstehen, die sich aufgrund der Fasern durch den Modulträger vergleichsweise weiträumig fortsetzen. Auch sind aus dem Organoblech selbst ausgeformte Durchgangsöffnungen häufig nicht ohne Weiteres mit der gewünschten Präzision und den gerade im Automobilbereich für die industrielle Massenfertigung einzuhaltenden engen Toleranzen herstellbar.

Aus der DE 10 2010 053 381 A1 oder der DE 10 2013 213 711 A1 ist bisher lediglich bekannt, an einem Organoblech eine Anspritzungen aus thermoplastischem Kunststoffmaterial vorzusehen. Die bei der Verwendung eines Organoblechs als Hauptbestandteil eines Modulträgers für ein Türmodul einer Kraftfahrzeugtür auftretenden Schwierigkeiten werden in dieser Druckschrift jedoch nicht thematisiert.

Es ist daher Aufgabe der Erfindung, einen zu einem wesentlichen Teil durch ein Organoblech gebildeten Modulträger für ein Türmodul einer Kraftfahrzeugtür weiter zu verbessern und insbesondere die vorgenannten Nachteile zu reduzieren.

Diese Aufgabe wird sowohl mit einem Modulträger des Anspruchs 1 als auch mit einem Herstellungsverfahren für einen Modulträger nach dem Anspruch 29 gelöst.

Erfindungsgemäß ist ein Modulträger für ein Türmodul einer Kraftfahrzeugtür gemäß dem gekennzeichneten Teil des Anspruchs 1 vorgeschlagen.

Grundgedanke der Erfindung ist es somit, einerseits an einem randseitigen oder randnahen Bereich des Modulträgers benötigte Strukturen durch angespritztes thermoplastisches Kunststoffmaterial auszubilden und andererseits ebenfalls an einem zentralen Bereich des Modulträgers Schnittstellen und/oder Öffnungen über angespritztes thermoplastisches Kunststoffmaterial auszubilden und/oder hierüber mindestens einen Abschnitt eines Funktionselements selbst auszubilden. Derart können an dem Modulträgers vorzusehende bzw. benötigte Strukturen, insbesondere hieran vorzusehende Ausformungen, Vertiefungen und Öffnungen hinsichtlich ihrer Anzahl oder des Grades der räumlichen Umformung reduziert und/oder mit deutlich größeren Toleranzen ausgeführt werden, weil die gewünschte Präzision durch die thermoplastischen Anspritzungen gewährleistet wird. So wird bei Definition der entsprechenden Bereiche des Modulträgers durch angespritztes Kunststoffmaterial leichter eine größere Präzision erreicht, als dies über eine Verformung des Organoblechs erreichbar ist. Bei einer randseitigen Anspritzung ist das thermoplastische Kunststoffmaterial in einem randnahen Bereich vorgesehen und bildet vorzugsweise auch einen Abschnitt des Randes des Modulträgers aus. Von einer zweiten Anspritzung im zentralen Bereich des Modulträgers wird demgegenüber vorliegend ausgegangen, wenn das angespritzte Kunststoffmaterial zu einem Rand des Organoblechs beabstandet ist und insbesondere nicht direkt hiermit verbunden ist.

Das thermoplastische Kunststoffmaterial, das für die erste (randseitige) Anspritzung und damit eine Anspritzungen eines ersten Typs verwendet ist, kann hierbei identisch zu einem thermoplastischen Kunststoffmaterial sein, das für eine zweite, innere Anspritzung und damit eine Anspritzung eines zweiten Typs verwendet ist. Insbesondere je nach Herstellungsverfahren, Spezifikation der auftretenden Belastungen und/oder der gewünschten Bauteileigenschaften können sich die Kunststoffmaterialien für eine erste und zweite Anspritzung auch unterscheiden. In bevorzugten Ausführungsvarianten sind regelmäßig mehrere erste randseitige Anspritzungen und/oder mehrere zweite innere Anspritzungen, die jeweils räumlich zueinander beabstandet sind, an dem Modulträger vorgesehen. Beispielsweise können mehrere zweite Anspritzungen vorgesehen sein, die an unterschiedlichen Stellen des Modulträgers Schnittstellen, Durchgangsöffnungen und/oder Abschnitte eines Funktionselements oder mehrerer Funktionselemente ausbilden.

In einer Ausführungsvariante bildet eine erste, randseitige Anspritzung mindestens einen sich flächig erstreckenden Abschnitt des Modulträgers aus. In dieser Variante ist somit ein Teil des sich vorzugsweise flächig entlang einer Hauptebene erstreckenden Modulträgers vollständig über angespritztes thermoplastisches Kunststoffmaterial ausgebildet. Beispielsweise wird hierbei durch eine erste randseitige Anspritzung ein Randbereich des Modulträgers vollständig ausgebildet, in dem kein Organoblech vorliegt. Hierbei kann der sich flächig erstreckende Abschnitt aus thermoplastischem Kunststoffmaterial zum Beispiel einen Abschnitt des Modulträgers ausbilden, der mechanisch weniger belastet ist oder ausgeprägte räumliche Strukturen ausweist, die in direkter Verbindung mit Organoblech nur schwer erzeugt werden können. Derartige rein thermoplastische Abschnitte können auch mehr als 10% der Oberfläche des Modulträgers bilden.

Alternativ oder ergänzend kann sich eine erste randseitige Anspritzung an dem gesamten äußeren Rand des Modulträgers entlang erstrecken. So kann hierüber insbesondere ein umlaufendes Dichtungselement des Modulträgers ausgebildet sein oder eine umlaufende vorzugsweise kanalartige Aufnahme für ein separat hieran montiertes oder hieran angespritztes Dichtungselement.

In einer ersten randseitigen Anspritzung aus thermoplastischem Kunststoffmaterial ist vorzugsweise mindestens eine Befestigungsöffnung als Schnittstelle zur Festlegung des Modulträgers an einer Türstruktur ausgeformt. Eine solche Befestigungsöffnung wird somit hier vollständig durch das an das Organoblech angespritzte thermoplastische Kunststoffmaterial im Bereich des äußeren Randes des Modulträgers ausgebildet, ohne dass hierfür ein Blechrand des Organoblechs selbst einen Teil der Funktionsfläche der auszubildenden Schnittstelle bildet.

Alternativ kann aber auch vorgesehen sein, dass an einem Blechrand des Organoblechs eine Öffnung vorgesehen ist, an und durch die thermoplastisches Kunststoffmaterial gespritzt ist, um hieran eine Befestigungsöffnung auszuformen. Die Abmessungen der Befestigungsöffnung aus thermoplastischem Kunststoffmaterial sind hierbei dann kleiner als die Abmessungen der Öffnung in dem Blechrand des Organoblechs und vorzugsweise auch einem engeren Toleranzbereich unterworfen. Für die Ausformung von Schnittstellen im Organoblech vorgesehene Öffnungen sind so hinreichend groß dimensioniert, dass vor dem Anspritzen thermoplastischen Kunststoffmaterials für die Ausbildung einer Schnittstelle die geforderte Lagepräzision dieser Schnittstelle gewährleistet werden kann. Hierfür werden insbesondere die aufgrund der Umformung des Organoblechs zu erwartenden Toleranzen beachtet.

In einer ersten randseitigen Anspritzung kann ferner auch mindestens eine Befestigungsöffnung als Schnittstelle zur Festlegung einer Türinnenverkleidung ausgeformt sein. Vorzugsweise bildet hierbei eine erste, randseitige Anspritzung aus thermoplastischem Kunststoffmaterial sowohl Befestigungsöffnungen für die Festlegung an einer Türstruktur als auch für die Festlegung einer Türinnenverkleidung an dem Modulträger aus.

In einem Ausführungsbeispiel wird durch die erste, randseitige Anspritzung mindestens eine Schnittstelle für die Festlegung eines Lautsprechers an dem Modulträger und/oder mindestens ein Schraubdom ausgeformt. Eine solche Schnittstelle für einen Lautsprecher und/oder ein Schraubdom können hierbei insbesondere an einem sich flächig erstreckenden Abschnitt aus thermoplastischem Kunststoffmaterial ausgebildet sein.

Alternativ oder ergänzend können in der ersten, randseitigen Anspritzung mindestens eine Durchgangsöffnung für die Durchführung eines Kabels oder eines Gestänge durch den Modulträger hindurch und/oder eine Durchgangsöffnung für ein Werkzeug zur Montage eines Fensterhebers an den Modulträger ausgeformt sein. Eine Durchgangsöffnung für ein Werkzeug zur Montage eines Fensterhebers dient dabei üblicherweise dazu, bei bereits an die Türstruktur montiertem Modulträger eine Verbindung einer an die Türstruktur eingesetzten Fensterscheibe mit einem Mitnehmer des Fensterhebers vornehmen zu können. So ist die Fensterscheibe üblicherweise in einen Nassraum in der Kraftfahrzeugtür absenkbar, der einerseits insbesondere durch ein Türaußenblech und andererseits durch ein Türinnenblech sowie eine Außenseite des auf dem Türinnenblech montierten Modulträger begrenzt ist. Durch eine verschließbare Montageöffnung an dem Modulträger ist dann von einer einem Trockenraum zugewandten Innenseite des Modulträgers aus der mit der Fensterscheibe zu verbindende Mitnehmer noch zugänglich. In einer Ausführungsvariante eines erfindungsgemäßen Modulträgers ist dann gerade eine solche Durchgangsöffnung durch angespritztes thermoplastisches Kunststoffmaterial an dem Modulträger ausgebildet.

Durch die zweite, innere, d.h., in dem zentralen Bereich vorgesehene Anspritzung ist vorzugsweise wenigstens eine Schnittstelle für
(a) die Festlegung einer Führungsschiene eines Fensterhebers und/oder
(b) die Festlegung eines Antriebs eines Fensterhebers und/oder
(c) die Festlegung eines Steuergeräts und/oder
(d) die Festlegung eines Airbagsensors und/oder
(e) die Festlegung eines Türzuziehgriffs und/oder
(f) die Festlegung eines Umlenkelements, über das ein Zugmittel eines Fensterhebers umgelenkt wird,
ausgeformt. Die vorgenannten Schnittstellen können hierbei insbesondere Befestigungsöffnungen, Schraubdome und/oder Lagerflächen aus angespritzten thermoplastischem Kunststoffmaterial einschließen.

In einem Ausführungsbeispiel ist durch eine zweite, innere Anspritzung aus thermoplastischem Kunststoffmaterial eine Schalldämmwand ausgeformt. Eine solche Schalldämmwand ist vorzugsweise im Bereich einer Lagerstelle für einen Fensterheberantrieb auf einer dem Trockenraum zugewandten Innenseite des Modulträgers vorgesehen, um im Betrieb des Fensterhebers auftretende Geräusche zu dämpfen. Eine solche angespritzte Schalldämmwand kann beispielsweise lamellenartig ausgebildet sein, um so durch die gewonnene Flexibilität in einfacher Weise vorgefertigte Schalldämmpads im Inneren einer durch die Schalldämmwand definierten Umrandung aufnehmen zu können.

Bei der Ausbildung einer Schnittstelle für ein Umlenkelement, wie zum Beispiel einem Umlenkstück oder einer Seilrolle für ein umzulenkendes Zugmittel eines Fensterhebers, ist in einer Ausführungsvariante vorgesehen, thermoplastisches Kunststoffmaterial hierfür an einer Ausstülpung aus Organoblech vorzusehen. Eine solche Ausstülpung kann einen hülsenartigen Fortsatz an dem Modulträger ausbilden, sodass über hieran angespritztes thermoplastisches Kunststoffmaterial eine hochbelastbare Lagerstelle für eine Seilrolle ausgebildet werden kann. Schließlich werden die Seilumlenkkräfte direkt von der thermoplastischen Anspritzung auf die vergleichsweise stabile Ausstülpung des Organoblechs weitergeleitet. In einer Weiterbildung weist die Ausstülpungen aus Organoblech an ihrem freien vorstehenden Ende eine unregelmäßige Kontur auf. Beispielsweise ist das freie vorstehende Ende gezackt und/oder gekerbt. Derart kann beim Umspritzen eines Randes des vorstehenden Endes mit thermoplastischem Kunststoffmaterial leichter eine verdrehsicherer Verbindung zwischen dem Organoblech und dem angespritzten thermoplastischem Kunststoffmaterial erreicht werden. Das angespritzte thermoplastische Kunststoffmaterial ist hierbei dann nicht nur stoffschlüssig, sondern auch formschlüssig mit der Ausstülpung verbunden.

Eine zweite, in dem zentralen Bereich vorgesehene Anspritzung formt beispielsweise eine Durchgangsöffnung für ein Kabel, ein (Betätigung-) Gestänge und/oder eine Antriebswelle eines Antriebs für einen Fensterheber aus, sodass sich das Kabel, das Gestänge und/oder die Antriebswelle hierüber durch den Modulträger hindurch erstrecken kann.

Alternativ oder ergänzend kann durch eine zweite Anspritzung eine Durchgangsöffnung für die Montage eines Fensterhebers an den Modulträger ausgeformt sein. Insbesondere kann vorgesehen sein, dass sowohl eine erste, randseitige Anspritzung als auch eine zweite, innere Anspritzung jeweils mindestens eine Durchgangsöffnung und/oder mindestens eine Schnittstelle für ein Funktionselement ausbilden. In einer Ausführungsvariante ist zum Beispiel eine Durchgangsöffnung für die Montage eines Fensterhebers an einer erste Stelle an dem Modulträger mithilfe einer Öffnung in dem Organoblech ausgebildet (ggf. mit angespritzten Kunststoffmaterial), an einer zweite Stelle ist eine solche Durchgangsöffnung vollständig durch eine zweite Anspritzung aus thermoplastischem Kunststoffmaterial ausgeformt.

In einer Ausführungsvariante ist durch die zweite, in dem zentralen Bereich vorgesehene Anspritzung aus thermoplastischem Kunststoffmaterial mindestens ein Abschnitt einer Führungsschiene eines Fensterhebers ausgeformt. Die Führungsschiene ist somit in dieser Variante erst nach dem Anspritzen thermoplastischen Kunststoffmaterials an das Organoblech vollständig hergestellt. Bevorzugt wird hierbei durch das angespritzte Kunststoffmaterial ein Führungsprofil der Führungsschiene ausgebildet, über das eine Führungsbahn für einen an der Führungsschiene verschieblich geführten Mitnehmer vorgegeben ist. Ein solches Führungsprofil weist üblicherweise einen längserstreckten Randsteg auf, der von dem Mitnehmer umgriffen ist und an dem entlang der Mitnehmer verschieblich geführt ist, um eine damit verbundene Fensterscheibe zu verstellen, d.h. anzuheben und abzusenken. Indem beispielsweise das Führungsprofil der Führungsschiene durch das nachträglich angespritzte Kunststoffmaterial, ein die im Betrieb des Fensterhebers auftretenden Kräfte aufnehmendes Stabilitätsprofil der Führungsschiene aber durch das Organoblech ausgebildet ist, können die unterschiedlichen Bestandteile der Führungsschiene funktionsoptimiert durch unterschiedliche Werkstoffe an dem Modulträger ausgebildet werden.

In einer Ausführungsvariante ist vor diesem Hintergrund wenigstens ein längserstreckter Sockel an dem Modulträger ausgebildet, der an einer Seite des Modulträgers erhaben vorsteht und als Stabilitätsprofil einer Führungsschiene, zum Beispiel für einen einsträngigen oder doppelsträngigen Fensterheber, genutzt wird. An diesen längserstreckten Sockel ist dann thermoplastisches Kunststoffmaterial angespritzt, über das das Führungsprofil der Führungsschiene ausgeformt wird. Ergänzend kann das angespritzte thermoplastische Kunststoffmaterial im Bereich eines Endes des Sockels auch zusätzlich eine Lagerstelle für ein Umlenkelement, wie zum Beispiel ein starres Umlenkstück oder eine Seilrolle ausformen. In einer Variante ist durch das angespritzte Kunststoffmaterial nicht nur einer Lagerstelle, sondern bereits ein starres Umlenkstück für ein flexibles Zugmittel des Fensterhebers ausgeformt.

Für die Ausbildung einer Schnittstelle zur Festlegung eines Umlenkelements durch das angespritzte thermoplastische Kunststoffmaterial kann aus dem Organoblech ein sich entlang einer Längserstreckungsrichtung des Sockels anschließender Lagerabschnitt ausgeformt sein. An diesen Lagerabschnitt des Organoblechs, der beispielsweise laschenartig ausgebildet ist, kann dann über das angespritzte thermoplastische Kunststoffmaterial die gewünschte Geometrie und Struktur für die Schnittstelle zur Festlegung des Umlenkelements ausgeformt werden.

In einer Ausführungsvariante liegen der ausgeformte Lagerabschnitt und mindestens ein hieran angrenzender Bereich des Organoblechs in zueinander versetzten Ebenen, so dass zwischen ihnen ein Freiraum in dem Organoblech vorliegt. So wurde das Organoblech für die Herausformung eines aus einer von dem Organoblech aufgespannten Hauptebene vorstehenden Lagerabschnitts lokal aufgetrennt, z.B. eingeschnitten. Durch die Herausformung des Lagerabschnitts entsteht ein Freiraum zwischen den Rändern der Auftrennung. Dies ist aber z.B. mit Blick auf eine Nass-Trockenraumtrennung innerhalb der Kraftfahrzeugtür nachteilig. Liegt der Versatz zwischen dem Lagerabschnitt und dem angrenzenden Organoblechabschnitt in einem randnahen Bereich des Modulträgers vor, ist zudem eine durchgehender Dichtungsrand für die dichtende Anlage des Modulträgers an der Türstruktur aufgrund des Versatzes nicht mehr gewährleistet. Vor diesem Hintergrund ist in einer Ausführungsvariante vorgesehen, dass ein Freiraum, der zwischen dem Lagerabschnitt aus Organoblech und einem hieran angrenzenden Abschnitt aus Organoblech vorhanden ist, durch angespritztes thermoplastisches Kunststoffmaterial geschlossen ist. Ein Versatz in dem Organoblech, der sich durch den aus dem Organoblech im Bereich einer Auftrennung herausgeformten Lagerabschnitt ergibt, wird somit durch angespritztes thermoplastisches Kunststoffmaterial ausgeglichen.

In einer möglichen Weiterbildung ist zusätzlich vorgesehen, dass das die Schnittstelle für die Festlegung des Umlenkelements ausbildende, angespritzte thermoplastische Kunststoffmaterial über eine Versteifungsstruktur aus angespritztem thermoplastischen Kunststoffmaterial mit dem den Freiraum schließenden Kunststoffmaterial und/oder einem den Freiraum berandenden Abschnitt aus Organoblech verbunden ist, um die Steifigkeit des Modulträgers im Bereich der Schnittstelle zu erhöhen.

In einer Ausführungsvariante ist an einem sich entlang einer Längserstreckungsrichtung des Sockels anschließenden Abschnitt des Organoblechs ein Anschlagbereich für die Begrenzung eines Verstellwegs des Fensterhebermitnehmers ausgeformt. Beispielsweise ist aus dem flächigen Organoblech ein zungenartig oder laschenartig vorstehender Anschlagsbereich herausgeformt. An diesem Anschlagbereich ist dann vorzugsweise eine Anspritzung aus thermoplastischem Kunststoffmaterial angebracht, um ein Anschlagelement für den Mitnehmer auszubilden, an dem der Mitnehmer anschlägt, wenn die hiermit verbundene Fensterscheibe maximal abgesenkt oder angehoben ist. Vorzugsweise ist ein solches, durch einen ausgeformten Anschlagbereich des Organoblechs und hieran angespritztes Kunststoffmaterial ausgebildetes Anschlagelement wenigstens an einem - bezogen auf den bestimmungsgemäß eingebauten Zustand des Modulträgers - unteren Ende des Sockels vorgesehen. Derart wird hierüber die maximal abgesenkte Lage der Fensterscheibe vorgegeben.

Bei einer Variante, bei der durch angespritztes thermoplastisches Kunststoffmaterial das Führungsprofil einer Führungsschiene an einem vorstehenden, längserstreckten Sockel aus Organoblech ausgebildet ist, kann vorgesehen sein, dass das thermoplastische Kunststoffmaterial durch das Organoblech des Sockels hindurchgespritzt ist. Hier wird somit im Rahmen des Herstellungsverfahrens thermoplastisches Kunststoffmaterial von einer Seite des Modulträgers zumindest teilweise durch das Organoblech hindurch gespritzt, sodass auf einer Seite des Organoblechs die gewünschte Struktur für das Führungsprofil ausgebildet wird, aber gleichzeitig thermoplastisches Kunststoffmaterial an der gegenüberliegenden Seite des Organoblechs vorliegt. An dieses an der gegenüberliegenden Seite des Organoblechs vorliegende thermoplastische Kunststoffmaterial kann thermoplastisches Kunststoffmaterial angespritzt sein, dass eine Versteifungsstruktur für die Führungsschiene ausbildet. Derart ist dann die Verstreifungsstruktur über das zumindest teilweise durchgespritzte thermoplastische Kunststoffmaterial für das Führungsprofil auch unmittelbar mit der auf der gegenüberliegenden Seite angespritzten Versteifungsstruktur verbunden.

Die vorstehend erläuterte Variante für eine direkte Verbindung zweier auf gegenüberliegenden Seiten des Modulträgers ausgebildeter Strukturen aus angespritztem thermoplastischem Kunststoffmaterial mittels wenigstens einer Durchspritzung des Organoblechs ist selbstverständlich nicht nur im Zusammenhang mit einem angespritzten Abschnitt einer Führungsschiene denkbar. Beispielsweise kann an nahezu jeder beliebigen Schnittstelle (auf einer ersten Seite des Modulträgers) vorgesehen sein, dass eine angespritzte Stütz- oder Versteifungsstruktur (auf der gegenüberliegenden Seite des Modulträgers) mittels zumindest einer lokalen Durchspritzung durch das Organoblech wenigstens teilweise direkt mit angespritztem thermoplastischen Kunststoffmaterial für eben diese Schnittstelle verbunden ist.

Grundsätzlich ist es bei einer Durchspritzung des Organoblechs mit thermoplastischem Kunststoffmaterial nicht zwingend, dass an dem Organoblech hierfür eine Durchgangsöffnung ausgebildet ist, durch die das Kunststoffmaterial fließen werden kann. So erlaubt das Organoblech auch ohne eine derartige Durchgangsöffnung, dass bei entsprechender Wahl von Temperatur und Druck thermoplastisches Kunststoffmaterial durch das Organoblech hindurchgespritzt werden kann. Um gegebenenfalls an dem Organoblech gezielt Bereiche zu definieren, an denen sich angespritztes thermoplastisches Kunststoffmaterial durch das Organoblech hindurch erstrecken soll, können an dem Organoblech Bereiche mit reduzierter Wandstärke vorgesehen sein.

Ein aus Organoblech ausgeformt längserstreckter Sockel muss selbstverständlich nicht notwendigerweise einen Teil einer Führungsschiene für einen Fensterheber ausbilden. In einer Variante ist ein solcher Sockel lediglich für die Vorgabe einer Schnittstelle für eine separat hergestellte Führungsschiene vorgesehen. An dem Sockel wird die Führungsstelle mit dem Modulträger verbunden und hieran fixiert.

Grundsätzlich kann es zur Gewichtsreduzierung vorgesehen sein, dass ein vorstehender, längserstreckter Sockel, der aus dem Organoblech ausgeformt ist, nicht als Vollkörper aus Organoblech ausgeführt ist. Vielmehr wird es bevorzugt, einen solchen Sockel durch entsprechende Umformung eines dünnwandigen Organoblechs auszubilden, sodass auf einer Seite des Modulträgers der Sockel vorsteht und auf einer gegenüberliegenden Seite des Modulträgers eine kanalartige Vertiefung ausgebildet ist. In einer hierauf basierenden Weiterbildung ist zur lokalen Versteifung des Sockels und des Kanals eine Stütz- oder Versteifungsstruktur durch in den Kanal eingespritztes thermoplastisches Kunststoffmaterial ausgebildet. Hier wird folglich über eine zweite, innere Anspritzung eine Stütz- oder Versteifungsstruktur ausgebildet. Dabei kann eine solche Stütz- oder Versteifungsstruktur mindestens eine Verstärkungs- oder Versteifungsrippe oder eine Rippenstruktur mit mehreren solcher Rippen aufweisen. Eine Rippe zur Versteifung des Sockels und des Kanals verläuft hierbei vorzugsweise zumindest in einem Abschnitt quer zu einer Längserstreckungsrichtung des Sockels und des Kanals. Über eine Rippenstruktur mit mehreren Verstärkungs- oder Versteifungsrippen können auch sich gegenüberliegende Innenwände des Kanals miteinander verbunden sein. Alternativ oder ergänzend kann selbstverständlich auch vorgesehen sein, den Kanal zumindest abschnittsweise mit hierin eingespritztem thermoplastischem Kunststoffmaterial aufzufüllen, um eine wenigstens lokale Verstreifung zu erreichen.

Eine durch angespritztes thermoplastisches Kunststoffmaterial ausgebildete Stütz- oder Versteifungsstruktur kann alternativ oder ergänzend auch an einer Schnittstelle für die Festlegung eines Funktionselements vorgesehen sein, insbesondere um den äußeren Rand des Modulträgers mit dieser Schnittstelle zu verbinden und hierüber die Steifigkeit des Modulträgers im Bereich des wenigstens einen Dichtelements zu erhöhen, das an dem äußeren Rand vorgesehen ist. Derart wird über die Stütz- oder Versteifungsstruktur aus angespritzten thermoplastischem Kunststoffmaterial eine Dichtungsrandsteifigkeit des Modulträgers gezielt erhöht.

In einer Ausführungsvariante ist eine Stütz- oder Versteifungsstruktur aus angespritztem thermoplastischem Kunststoffmaterial mit mindestens einer (Versteifungs- oder Verstärkungs-) Rippe ausgebildet und an einer Schnittstelle für die Festlegung eines Türzuziehgriffs vorgesehen. Vorzugsweise weist die Stütz- oder Versteifungsstruktur hierbei an der Schnittstelle mehrere Rippen auf, die an einer durch angespritztes Kunststoffmaterial ausgebildeten Befestigungsöffnung der Schnittstelle strahlenförmig angeordnet sind. Über ein und dasselbe angespritzte Kunststoffmaterial oder über verschiedene angespritzte Kunststoffmaterialien ist hier somit nicht nur eine Befestigungsöffnung für die Festlegung des Türzuziehgriffs ausgeformt, sondern auch eine Stütz- oder Versteifungsstruktur mit mehreren Rippen, über die im Bereich dieser Befestigungsöffnung eine Steifigkeit zur Aufnahme der auftretenden Belastungen erhöht ist.

Wie bereits zuvor teilweise erläutert, kann thermoplastisches Kunststoffmaterial für die Stütz- oder Versteifungsstruktur kann mittels zumindest einer lokalen Durchspritzung durch das Organoblech des Modulträgers wenigstens teilweise auch auf einer gegenüberliegenden Seite des Organoblechs vorliegen. Das thermoplastische Kunststoffmaterial der auf einer Seite des Organoblechs ausgebildeten Stütz- oder Versteifungsstruktur erstreckt somit zumindest teilweise durch das Organoblech hindurch. Hierüber ist kann eine verbesserte Fixierung der Anspritzung an dem Organoblech erreicht werden.

In einer Weiterbildung kann der sich durch das Organoblech hindurcherstreckende Teil auch direkt mit auf der gegenüberliegenden Seite angespritzten thermoplastischen Kunststoffmaterial verbunden werden, über das z.B. eine Schnittstelle für ein Funktionselement oder zumindest ein Abschnitt eines Funktionselements ausgebildet wird. In einer Ausführungsvariante ist beispielsweise auf einer Innenseite des Modulträgers eine Stütz- oder Versteifungsstruktur an das Organoblech gespritzt. Diese Stütz- oder Versteifungsstruktur ist mittels zumindest lokaler Durchspritzungen durch das Organoblech des Modulträgers wenigstens teilweise direkt mit dem auf der Außenseite des Modulträgers an das Organoblech angespritzten thermoplastischen Kunststoffmaterial für eine Befestigungsstelle eines Türzuziehgriffs und/oder den hierüber an der Außenseite an der Befestigungsstelle ausgeformten Versteifungsstrukturen verbunden.

In einer Ausführungsvariante bildet das Organoblech des Modulträgers eine Wandung aus, die an eine aus angespritztem thermoplastischem Kunststoffmaterial gebildete Schnittstelle zur Festlegung eines Lautsprechers angrenzt. Diese Wandlung ist dann vorzugsweise derart ausgebildet, dass sie sich zumindest abschnittsweise in Form einer Abwinklung von einer Hauptebene des Modulträgers, entlang der sich der Modulträger im Wesentlichen flächig erstreckt, in Richtung einer aus angespritzten thermoplastischem Kunststoffmaterial gebildeten Schnittstelle zur Festlegung einer Führungsschiene erstreckt. Die Wandung verbindet somit zwei Schnittstellen aus thermoplastischem Kunststoffmaterial miteinander und stellt über ihre Erstreckung winklig zur Hauptebene eine Struktur aus Organoblech bereit, über die die Führungsschienen-Schnittstelle abgestützt ist. So wirken an dieser vornehmlich Kräfte senkrecht zur Hauptebene. Diese Kräfte können direkt in die abstützende Wandung aus Organoblech eingeleitet werden.

Eine erste Anspritzung kann zumindest einen Abschnitt eines Randes des Organoblechs ebenso wie eine erste und/oder eine zweite Anspritzung einen Rand einer Durchgangsöffnung in dem Organoblech umgreifen können, sodass der jeweilige Rand mit thermoplastischem Kunststoffmaterial umspritzt ist. Das angespritzte thermoplastische Kunststoffmaterial erstreckt sich somit über den jeweiligen Rand hinweg auf zwei Seiten des Organoblechs und stellt damit eine verbesserte Verbindung zwischen Organoblech und thermoplastischem Kunststoffmaterial sicher.

Ein weiterer Aspekt der Erfindung ist ein Verfahren zur Herstellung eines Modulträgers für ein Türmodul einer Kraftfahrzeugtür. Im Rahmen eines erfindungsgemäßen Herstellungsverfahrens ist dabei wenigstens vorgesehen,
- an einem äußeren Rand des Modulträgers thermoplastisches Kunststoffmaterial anzuspritzen, um hierüber einen zentralen Bereich des Modulträgers zumindest teilweise zu beranden und mindestens eine Schnittstelle zur Festlegung des Modulträgers an einer Türstruktur einer Kraftfahrzeugtür und/oder zur Festlegung einer weiterer Komponente der Kraftfahrzeugtür an Modulträger zu definieren und/oder ein randseitiges Dichtungselement des Modulträgers aufzunehmen oder auszubilden, wobei ein Rand des Organoblechs mit thermoplastischem Kunststoffmaterial derart umspritzt wird, dass über die erste Anspritzung aus thermoplastischem Kunststoffmaterial ein das Organoblech ergänzender und die Oberfläche des Modulträgers mitdefinierender Abschnitt gebildet ist, der einen Bereich des äußeren Randes des Modulträgers ausbildet, in dem kein Organoblech vorliegt, und
- zumindest in dem zentralen Bereich des Modulträgers zusätzlich dasselbe oder ein anderes thermoplastisches Kunststoffmaterial an das Organoblech anzuspritzen, um eine Schnittstelle für ein an dem Modulträger festzulegendes Funktionselement und/oder eine Durchgangsöffnung zu definieren und/oder zumindest einen Abschnitt eines Funktionselements auszubilden.

Über ein erfindungsgemäßes Verfahren kann ein erfindungsgemäße Modulträger hergestellt werden, so das vorstehend und nachstehend genannte Vorteile und Merkmale von Ausführungsvarianten eines erfindungsgemäßen Modulträgers auch für ein erfindungsgemäßes Herstellungsverfahren gelten und umgekehrt.

Eine erste, randseitige Anspritzung und eine zweite, in dem zentralen Bereich des Modulträgers vorgesehene innere Anspritzung können in einem einzigen Spritzgießvorgang erzeugt werden. Dies ist insbesondere von Vorteil, wenn identisches thermoplastisches Kunststoffmaterial verwendet wird, um die unterschiedlichen Typen von Anspritzungen herzustellen. In einer alternativen Ausführungsvariante werden die mindestens eine erste und die mindestens eine zweite Anspritzung in wenigstens zwei aufeinanderfolgenden und damit zeitlich getrennten Spritzgießvorgängen erzeugt.

Je nach gewünschter Ausgestaltung des Modulträgers und insbesondere der Anzahl von Schnittstellen und/oder Durchgangsöffnungen, die über thermoplastisches Kunststoffmaterial an einem Rand oder ein einem zentralen Bereich des Modulträgers ausgebildet werden sollen, können mehrere erste und/oder zweite Anspritzungen aus thermoplastischem Kunststoffmaterial an dem Organoblech ausgeformt werden. Eine Mehrzahl von ersten und/oder zweiten Anspritzungen können hierbei zeitlich und/oder räumlich zueinander versetzt an dem Modulträger hergestellt werden.

Für die Ausformung von Schnittstellen und/oder Durchgangsöffnungen an dem Organoblech des Modulträgers kann im Rahmen einer Ausführungsvariante eines erfindungsgemäßen Herstellungsverfahrens vorgesehen sein, äußere Ränder des Organoblechs, die dessen äußere Kontur definieren, und/oder Ränder von Öffnungen in dem Organoblech mit thermoplastischem Kunststoffmaterial zu umspritzen, um hierüber eine erste und/oder eine zweite Anspritzung aus thermoplastischem Kunststoffmaterial auszubilden. Alternativ oder ergänzend kann das Organoblech zumindest lokal mit thermoplastischem Kunststoffmaterial durchspritzt werden, um zum Beispiel eine Schnittstelle an dem Organoblech für den herzustellenden Modulträger auszubilden.

Weitere Vorteile und Merkmale der Erfindung werden bei der nachfolgenden Beschreibung von Ausführungsbeispielen anhand der Figuren deutlich werden.

Es zeigen:
- Figur 1: mit dem Blick auf die Innenseite eine Türstruktur eines Kraftfahrzeugs und einen Modulträger eines zugehörigen Türmoduls;
- Figur 1B: mit Blick auf eine Außenseite die Anordnung aus der Figur 1 mit an dem Modulträger zusätzlich festgelegten Funktionselementen;
- Figur 2: eine vergrößerte Darstellung der Außenseite des Türmoduls aus Figur 1B;
- Figuren 3A bis 3B: mit Blick auf die Innenseite (Figur 3A) und die Außenseite (Figur 3B) den Modulträger der Figur 2 mit Hervorhebung hieran vorgesehener Anspritzungen aus thermoplastischem Kunststoffmaterial;
- Figuren 4A bis 4B: vergrößerte Ausschnitte der Figuren 3A und 3B mit Blick auf eine Schnittstelle zur Festlegung einer Führungsschiene eines Fensterhebers;
- Figuren 5A bis 5B: vergrößerte Ausschnitte der Figuren 3A und 3B mit Blick auf eine Schnittstelle zur Festlegung eines Lautsprechers;
- Figuren 6A bis 6B: mit Blick auf eine Außenseite (Figur 6A) und eine Innenseite (Figur 6B) ein weiteres Ausführungsbeispiel eines erfindungsgemäßen Modulträgers mit hieran vorgesehenen unterschiedlichen Anspritzungen aus thermoplastischem Kunststoffmaterial;
- Figur 6C: mit Blick auf die Außenseite den Modulträger mit Hervorhebung seiner Bestandteile aus Organoblech und angespritztem thermoplastischem Kunststoffmaterial;
- Figuren 7A bis 7B: vergrößerte Ausschnitte des Organoblechs des Modulträgers der Figuren 6A bis 6C;
- Figuren 7C bis 7D: die in den Figuren 7A und 7B dargestellten Bereiche des Organoblechs mit hieran vorgesehenen Anspritzungen aus thermoplastischem Kunststoffmaterial;
- Figuren 8A bis 8B: ein vergrößerter Ausschnitt des Modulträgers der Figuren 6A und 6B mit einem Umlenkelement in Form einer Seilrolle und seinem zugehörigen (Sicherungs-) Bolzen in Explosionsdarstellung;
- Figur 9A: einen vergrößerten Ausschnitt des Organoblechs der Figur 6C mit Blick auf einen unteren Bereich für eine an dem Modulträger vorgesehene Führungsschiene;
- Figur 9B: in mit der Figur 9A übereinstimmender Ansicht den Modulträger mit an das Organoblech angespritztem thermoplastischen Kunststoffmaterial.

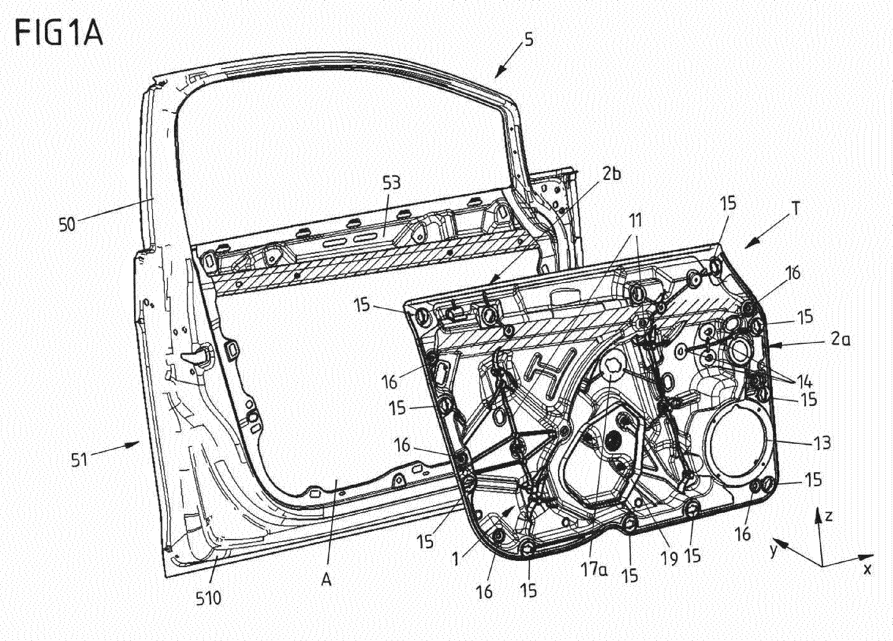

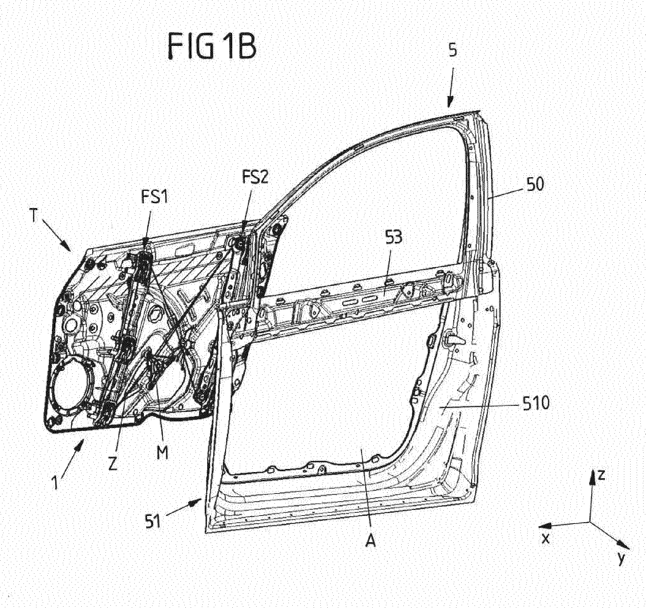

In den Figuren 1A und 1B sind wesentliche Elemente einer Kraftfahrzeugtür dargestellt, darunter ein Türmodul T und eine Türstruktur 5. Das Türmodul T ist dazu ausgebildet, an der Türstruktur 5 festgelegt zu werden. Das Türmodul T umfasst hierbei einen Modulträger 1, an welchem Funktionselemente des Türmoduls T montiert werden können, und zwar insbesondere bevor das Türmodul T an der Türstruktur 5 festgelegt worden ist, wie in den Figuren 1A und 1B gezeigt.

Bei einem bestimmungsgemäßen Einbau einer Kraftfahrzeugtür in ein Kraftfahrzeug weist diese - ebenso wie die Türstruktur 5 und das Türmodul T als Komponenten der Kraftfahrzeugtür - eine Innenseite und eine Außenseite auf. Die Innenseite ist dem Innenraum des Kraftfahrzeugs zugewandt und die Außenseite einem Bereich außerhalb des Kraftfahrzeugs.

Des Weiteren kann - bezogen auf den bestimmungsgemäßen Einbau der Kraftfahrzeugtür in das Kraftfahrzeug - ein Koordinatensystem für die Kraftfahrzeugtür und deren Elemente definiert werden. Die Fahrzeuglängsachse x erstreckt sich hierbei von einer Rückseite des Kraftfahrzeugs zu dessen Vorderseite, also entlang der Vorwärtsfahrtrichtung. Die Fahrzeugquerachse y erstreckt sich senkrecht zu der Fahrzeuglängsachse x zwischen zwei gegenüberliegenden Kraftfahrzeugtüren des Kraftfahrzeugs. Die Fahrzeugvertikalachse z ist dadurch definiert, dass sie sowohl senkrecht auf der Fahrzeuglängsachse x als auch auf der Fahrzeugquerachse y steht. Die Fahrzeugvertikalachse z erstreckt sich vom Boden des Kraftfahrzeugs zu dessen Dach hin.

In Figur 1A sind die Innenseiten der Türstruktur 5 und des Türmoduls T dargestellt; und in Figur 1B ist die Außenseite der Anordnung aus Figur 1A gezeigt, jedoch mit zusätzlichen Funktionselementen, die in Figur 1A nicht erkennbar sind.

Die Türstruktur 5 umfasst eine Fensterrahmenstruktur 50 und einen Türkasten 51. Die Fensterrahmenstruktur 50 und der Türkasten 51 sind in der hier dargestellten Ausführungsform durch ein Türinnenblech 510 gebildet. Alternativ können sie beispielsweise durch ein Kunststoffelement oder ein Kompositmaterial gebildet sein.

Eine Brüstungsbegrenzung 52 trennt die Fensterrahmenstruktur 50 von dem Türkasten 51. Die Brüstungsbegrenzung 52 erstreckt sich entlang der Fahrzeuglängsachse x zwischen der Vorderseite und der Hinterseite der Türstruktur 5. Die Brüstungsbegrenzung 52 kann beispielsweise als Blechprägeteil ausgebildet sein.

Der Türkasten 51 und die Brüstungsbegrenzung 52 umgeben eine Aussparung A in der Türstruktur 5. Bei einer bestimmungsgemäßen Festlegung des Türmoduls T an der Türstruktur 5 wird die Aussparung A von dem Türmodul T verdeckt. Dadurch trennt das Türmodul T zusammen mit der Türstruktur 5 in bekannter Weise einen Nassraum von einem Trockenraum der Kraftfahrzeugtür.

Der Trockenraum liegt vor der Innenseite des Türmoduls T und der Nassraum liegt vor der Außenseite des Türmoduls T. Im Bereich des Nassraums werden insbesondere Elemente einer Kraftfahrzeugtür angeordnet, welche nicht feuchtigkeitsempfindlich sind. Im Bereich des Trockenraums werden hingegen insbesondere Elemente einer Kraftfahrzeugtür angeordnet, welche feuchtigkeitsempfindlich sind.

Auf der Innenseite des Modulträgers 1 sind entsprechend der Darstellung der Figur 1A insbesondere mehrere Schnittstellen zur Verbindung mit dem Türinnenblech 510 in Form von Befestigungsöffnungen 15 ersichtlich. Diese Befestigungsöffnungen 15 sind vorliegend für eine Bajonettverbindung an einem Rand des Modulträgers 1 ausgebildet. Für die Verbindung mit einer hier nicht dargestellten Türinnenverkleidung sind an dem Rand des Modulträgers 1 ferner noch Befestigungsöffnungen 16 vorgesehen. Diese Befestigungsöffnungen 16 für die Verbindung zu der Türinnenverkleidung sind wie die Befestigungsöffnungen 15 für die Verbindung des Modulträgers 1 mit dem Türinnenblech 510 in einem randseitigen Bereich des Modulträgers 1 vorgesehen.

An dem Rand des Modulträgers 1 läuft eine Dichtung mit Dichtungselemente 2a, 2b entlang, um den Modulträger 1 dichtend an der Türstrukturen 5 festlegen zu können. Die Dichtung 2a, 2b ist vorliegend in zwei Dichtungsabschnitte untergliedert; einen U-förmigen Abschnitt eines Dichtungselements 2a, das sich an einem vorderen, unteren und hinteren Rand des Modulträgers 1 (bezogen auf seine bestimmungsgemäß eingebauten Zustand) entlang erstreckt und, einem geradlinig verlaufenden Abschnitt eines Dichtungselement 2b an einem oberen brüstungsnahen Rand des Modulträgers 1. Ferner sind an dem Modulträger mehrere Schnittstellen 13, 14 und 17a für die Festlegung von Funktionskomponenten des Türmoduls T ausgebildet. Hierzu zählen insbesondere eine Schnittstelle 13 für die Befestigung eines Lautsprechers, eine Befestigungsstelle 14 in Form mehrerer Befestigungsöffnungen für ein Steuergerät und eine Befestigungsstelle 17a mit einer Befestigungsöffnung für einen Airbagsensor.

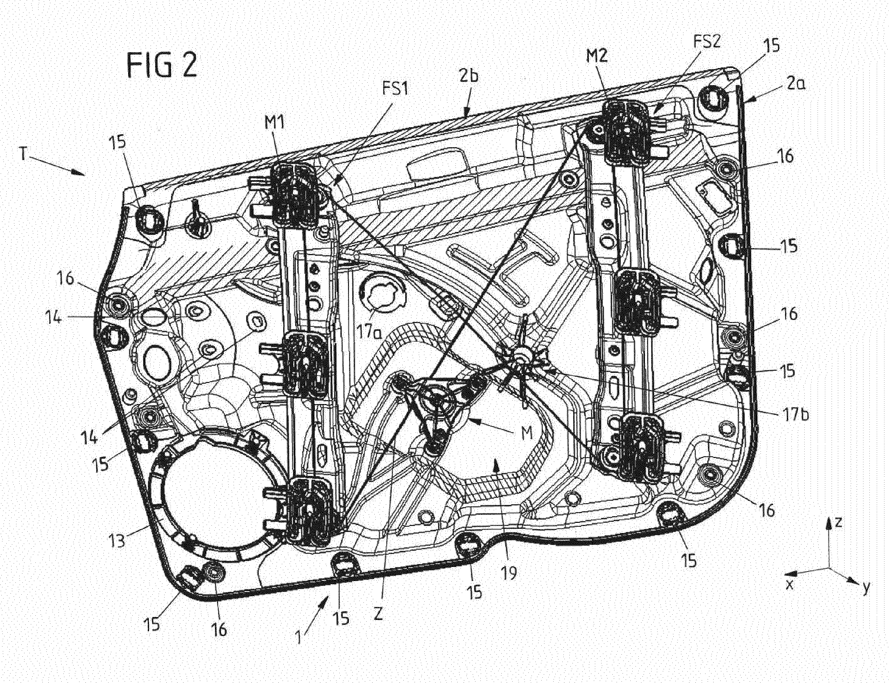

Des Weiteren ist eine Lagerstelle 19 für einen Fensterheberantrieb an dem Modulträger 1 ausgebildet. Diese Lagerstelle 19 dient der bestimmungsgemäßen Befestigung eines Antriebsmotors des Fensterheberantriebs auf der Innenseite des Modulträgers 1, sodass hierüber an der Außenseite des Modulträgers 1 angeordnete Mitnehmer M1, M2 entlang zugehöriger Führungsschienen FS1 und FS2 verschoben werden können und eine Fensterscheibe der Kraftfahrzeugtür fremdkraftbetätigt angehoben und abgesenkt werden kann. Diese Führungsschienen FS1 und FS2, als Funktionselemente des Türmoduls T, sind in der Figur 1B und der Figur 2 dargestellt.

Die Mitnehmer M1 und 2 werden über ein flexibles Zugmittel in Form eines Seilzugs Z zu einer Verstellbewegung entlang der Führungsschienen FS1 und FS2 angetrieben. Hierbei treibt ein Antriebsmotor des Fensterheberantriebs eine auf der Außenseite des Modulträgers 1 angeordnete Seiltrommel an, um durch Auf- und Abwickeln des sich kreuzenden Seilzugs Z die Mitnehmer M1 und M2 zu verschieben. Diese Seiltrommel des Fensterheberantriebs ist an einer Lagerplatte drehbar gelagert. Diese ist im Bereich der Lagerstelle 19 für den Antriebsmotor auf der gegenüberliegenden Außenseite des Modulträgers 1 fixiert und vorliegend im Wesentlichen mit einer dreiecksförmigen Grundfläche ausgebildet.

Die Befestigungsstellen 14 für das Steuergerät, die Befestigungsstelle 17a für den Airbagsensor und die Befestigungsstellen für die Lagerplatte sind vorliegend in einem zentralen Bereich des Modulträgers 1 vorgesehen ebenso wie eine Befestigungsstelle 17b für einen Türzuziehgriff.

Ergänzend zu einer Durchgangsöffnung für die Fixierung des Türzuziehgriffs bildet die Befestigungsstelle 17b eine Versteifungsstruktur über mehrere strahlenförmig zu der Befestigungsöffnung verlaufende Versteifungsrippen aus. Hierüber ist der Modulträger 1 lokal versteift, um den beim Schließen der Kraftfahrzeugtür auftretenden und über den Türzuziehgriff in den Modulträger 1 eingeleiteten Kräften ausreichend standzuhalten.

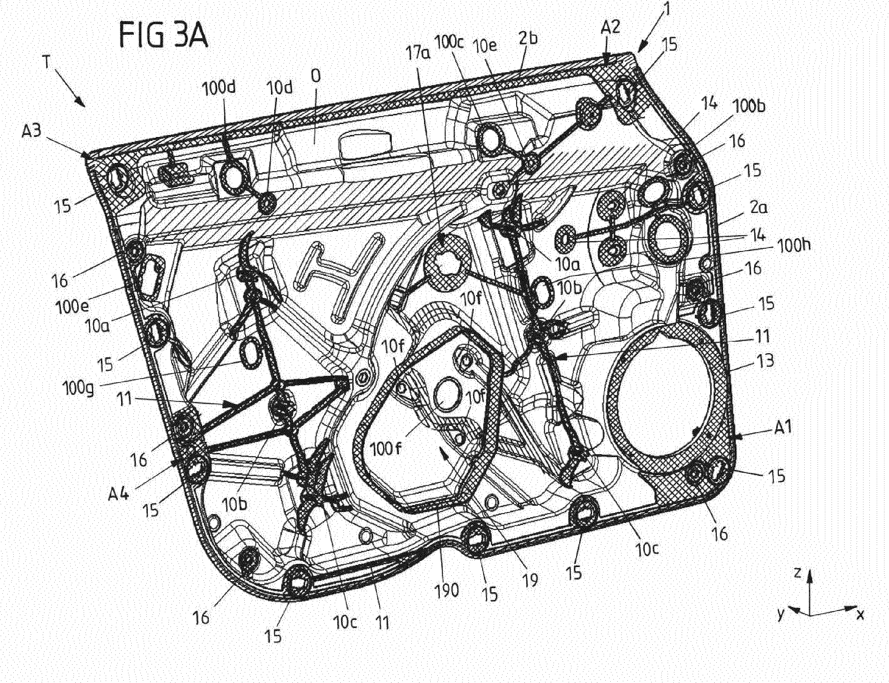

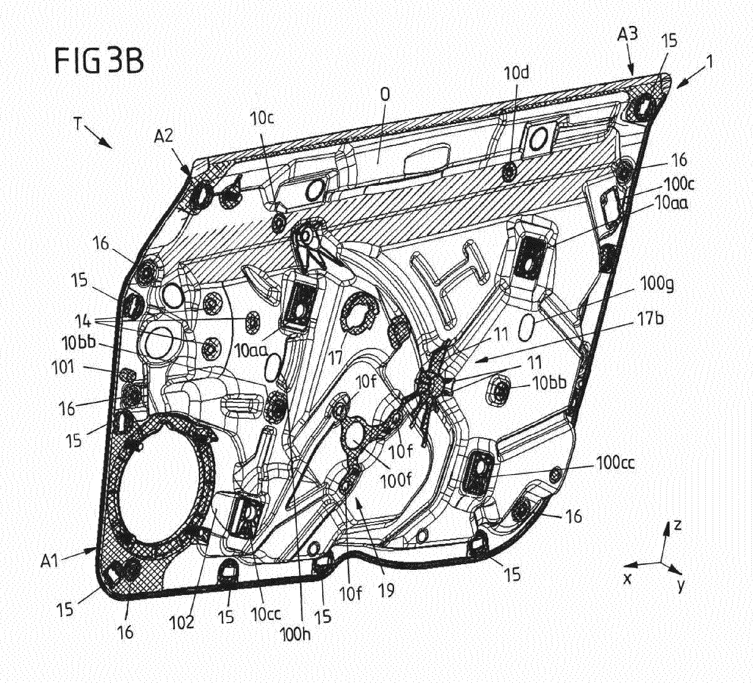

Wie insbesondere aus den weiteren Darstellungen der Figuren 3A bis 3B, 4A bis 4B und 5A bis 5B näher veranschaulicht ist, ist der Modulträger 1 zu einem wesentlichen Teil durch ein sich flächig erstreckendes Organoblech O gebildet. An diesem Organoblech O sind sowohl auf der Innenseite als auch auf der Außenseite des Modulträgers 1 reliefartige Strukturen und insbesondere auch Durchgangsöffnungen ausgebildet. Die Strukturierung des Organoblechs O und das Vorsehen von Durchgangsöffnungen an dem Organoblech O dient dabei der Ausbildung von Schnittstellen zur Festlegung des Modulträgers 1 an der Türstrukturen 5 und der Festlegung der Türinnenverkleidung sowie der Definition von Schnittstellen an dem Modulträger 1, an denen bestimmungsgemäß Funktionselemente des Türmoduls T, wie zum Beispiel die Führungsschienen FS und FS2 fixiert werden sollen. Um die durch die Verformung des Organoblechs O auftretenden Spannungen innerhalb des Organoblechs O zu reduzieren und leichter eine engere Tolerierung der Abmessungen für die einzelnen Öffnungen an dem Modulträger 1 zu erreichen sowie die Herstellung des Modulträgers 1 zu optimieren, ist an das Organoblech O an verschiedenen Stellen thermoplastisches Kunststoffmaterial angespritzt. Über die entsprechenden Anspritzungen aus thermoplastischem Kunststoffmaterial sind hierbei dann letztlich die einzelnen Schnittstellen, insbesondere etwaige Befestigungsöffnungen, Stütz- und Versteifungsstrukturen sowie die Dichtungselemente 2a, 2b ausgeformt.

Hierbei ist an einen Rand des Organoblechs O einerseits umlaufend thermoplastisches Kunststoffmaterial angespritzt, sodass hierüber der Rand des Modulträgers 1 ausgeformt ist. Andererseits sind auch an einem zentralen, d.h., von seinem Blechrand eingegrenzten Bereich des Organoblechs O mehrere zusätzliche Anspritzungen aus thermoplastischem Kunststoffmaterial vorgesehen, über die insbesondere die Befestigungsstellen 14 für das Steuergerät, die Befestigungsstelle 17a für den Airbagsensor, die Befestigungsstelle 17b für den Türzuziehgriff, Durchgangsöffnungen 10a bis 10f und 100a bis 100h für unterschiedliche Zwecke sowie Stütz- und Versteifungsstrukturen 11 ausgeformt sind.

Eine erste randseitige Anspritzung aus thermoplastischem Kunststoffmaterial bildet hierbei neben den Dichtungselementen 2a und 2b Flächenabschnitte A1 bis A3 aus. In diesen Bereichen des Modulträgers 1 liegt kein Organoblech O vor, sondern ein Rand des Organoblechs O ist mit thermoplastischem Kunststoffmaterial derart umspritzt worden, dass über das thermoplastische Kunststoffmaterial eine das Organoblech O ergänzender und die Oberfläche des Modulträgers 1 mitdefinierende Abschnitt gebildet ist.

An diesen Flächenabschnitten A1, A2 und A3 ist ferner jeweils wenigstens nicht nur ein Teil eines Dichtungselements 2a, 2b ausgeformt, sondern auch mindestens eine Befestigungsöffnung 15 für die Verbindung zum Türinnenblech 510. In einem Flächenabschnitt A1 wird zudem die Schnittstelle 13 für den Lautsprecher ausgeformt, d.h., insbesondere eine großflächige Öffnung, in die der Lautsprecher einzusetzen und an deren Rand der Lautsprecher zu fixieren ist.

Auf der Innenseite des Modulträgers 1 ist über das randseitig angespritzte thermoplastische Kunststoffmaterial ein weiterer Flächenabschnitt A4 ausgebildet. Dieser erstreckt sich vorliegend als Schicht über einen Organoblechabschnitt. Auch hier ist aber über das angespritzte thermoplastische Kunststoffmaterial insbesondere eine Befestigungsöffnung 15 für die Verbindung zum Türinnenblech 510 ausgeformt. Hier war aber, wie auch an anderen Stellen des Organoblechs O, bereits eine Durchgangsöffnung in dem Organoblech O vorhanden, bevor das Kunststoffmaterial hieran angespritzt wurde. Erst aber durch das angespritzte thermoplastische Kunststoffmaterial werden hier die jeweiligen Befestigungsöffnungen 15 und 16 in dem gewünschten engen Toleranzbereich ausgeformt.

Gleiches gilt für die Befestigungsöffnung und einem hieran angrenzenden Randbereich der Schnittstelle 17a für den Airbagsensor und die Durchgangsöffnungen an den Befestigungsstellen 14 für das Steuergerät. Auch zusätzliche an dem Modulträger 1 vorzusehende Durchgangsöffnungen 100a bis 100c und 10d, 10e, die beispielsweise der Durchführung von Kabeln oder Gestängeteilen durch den Modulträger 1 hindurch dienen, sind hierbei über abseits des Randes des Modulträgers 1 angespritztes thermoplastisches Kunststoffmaterial ausgeformt.

Im Bereich der Lagerstelle 19 ist über angespritztes thermoplastisches Kunststoffmaterial nicht nur eine Durchgangsöffnung 100f für eine Antriebswelle des Antriebsmotors des Fensterheberantriebs ausgeformt, sondern es sind hierüber auch Befestigungsöffnungen 10f für die Fixierung der Lagerplatte M definiert. Das angespritzte thermoplastische Kunststoffmaterial erstreckt sich hierbei an der Außenseite des Modulträgers 1 derart, dass hierüber ein Rand der zentral angeordneten Durchgangsöffnung 100f für die Antriebswelle mit den Rändern der Befestigungsöffnungen 10f für die Lagerplatte M des Fensterheberantriebs verbunden ist.

An der Lagerstelle 19 ist zudem ein Funktionselement in Form einer Schalldämmwand 190 durch angespritztes thermoplastisches Kunststoffmaterial ausgeformt. Diese Schalldämmwand 190 verläuft auf der Innenseite des Modulträgers 1 durchgängig um die Lagerstelle 19, um im Betrieb des Fensterheberantriebs auftretende Geräusche zu dämpfen.

Über an das Organoblech O angespritztes thermoplastisches Kunststoffmaterial, wie zum Beispiel Polyamid, sind vorliegend auch die Schnittstellen für die Befestigung der Führungsschienen FS1 und FS2 definiert. Hierbei sind auf der Außenseite des Modulträgers 1 über angespritztes Kunststoffmaterial Lager- oder Auflageflächen 10aa, 10bb und 10cc ausgebildet. Auf der gegenüberliegenden Innenseite des Modulträgers 1 ist über das angespritzte Kunststoffmaterial die jeweilige Befestigungsstelle 10a, 10b oder 10c mit Schraubdomen ausgebildet, die gleichzeitig in Stütz- und Versteifungsstrukturen 11 mit mehreren Rippen übergehen.

Diese Stütz- und Versteifungsstrukturen 11 sind auch mit Durchgangsöffnungen 100g und 100h für die Heranführung eines Werkzeug an die Mitnehmer M1 und M2 verbunden. Die Durchgangsöffnungen 100g und 100h, deren finalen Abmessungen ebenfalls durch das angespritzte thermoplastische Kunststoffmaterial vorgegeben sind, gestatten nach der Anbringung des Türmoduls T an der Türstruktur 5 die bestimmungsgemäße Verbindung der Mitnehmer M1 und M2 mit der zu verstellenden Fensterscheibe von der Trockenraumseite aus. Die Durchgangsöffnungen 100g und 100h sind hierbei zur Gewährleistung der Nass-Trockenraumtrennung verschließbar, z.B. mit einem hier nicht dargestellten aufsteckbaren Deckelelement aus Kunststoff.

Um bei der Anbringung des Türmoduls T an der Türstruktur 5 den Modulträger 1 in einer gewünschten Relativlage zu halten, bevor die Fixierung an den Befestigungsöffnungen 15 erfolgt, sind über angespritztes thermoplastisches Kunststoffmaterial auch mehrere Positionierungszapfen 101 ausgeformt. Ein Positionierungszapfen 101 greift in eine zugehörige Öffnung an der Türstruktur 5 ein und erhält damit das Türmodul T in Position, bis es endgültig fixiert ist.

Über die sich teilweise weitläufig erstreckenden, rippenartigen Stütz- und Versteifungsstrukturen 11 aus angespritztem thermoplastischem Kunststoffmaterial werden an einigen Stellen auch Schnittstellen in Form der Befestigungsstellen 10a bis 10cc für die Führungsschiene FS2, in Form der Befestigungsstellen 14 für das Steuergerät und andere innenliegende Bereiche des Modulträgers 1 gezielt mit dem äußeren Rand des Modulträgers 1 verbunden, um die Steifigkeit des Modulträgers 1 im Bereich der Dichtung 2a, 2b zu erhöhen und damit die Steifigkeit eines Dichtungsrandes des Modulträgers 1 zu erhöhen.

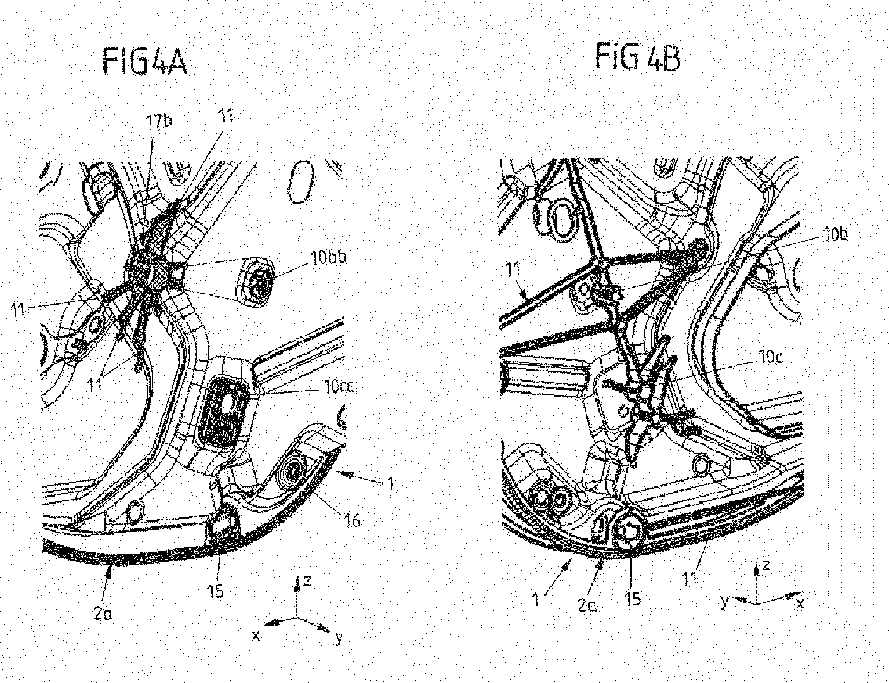

Anhand der Detaildarstellungen der Figuren 4A und 4B ist beispielhaft insbesondere die angespritzte Versteifungsstruktur 11 im Bereich der Befestigungsstelle 17b für den Türzuziehgriff mit mehreren sich strahlenförmig von einer Befestigungsöffnung weg erstreckenden Rippen veranschaulicht. Auch sind hier die Lager- oder Auflageflächen 10bb und 10cc sowie die Schraubdome an den Befestigungsstellen 10b und 10c für die Führungsschiene FS2 in vergrößertem Maßstab dargestellt.

Hierbei kann vorgesehen sein, dass z.B. zumindest ein Teil des thermoplastischen Kunststoffmaterials der Befestigungsstelle 17b auf der Außenseite des Modulträgers 1 durch das Organoblech O hindurchgespritzt ist.

Ergänzend kann vorgesehen sein, dass danach auf der gegenüberliegenden Innenseite eine Versteifungsstruktur 11 angespritzt wird, sodass das durchgespritzte thermoplastische Kunststoffmaterial der Befestigungsstelle 17b wenigstens teilweise direkt mit dem thermoplastischen Kunststoffmaterial der Versteifungsstruktur 11 verbunden ist. Alternativ kann grundsätzlich auch vorgesehen sein, zunächst die Versteifungsstruktur 11 auf der Innenseite anzuspritzen, wobei wenigstens ein Teil des hierfür angespritzten thermoplastischen Kunststoffmaterials durch das Organoblech O hindurchgespritzt wird. Beim nachfolgenden Anspritzen des thermoplastischen Kunststoffmaterials für die Befestigungsstelle 17b auf der gegenüberliegenden Außenseite wird dann ebenfalls eine direkte Verbindung der beiden angespritzten Strukturen 17b und 11 erreicht. Die beiden zuvor dargestellten Varianten mit einer zumindest teilweisen Durchspritzung des Organoblechs sind dabei selbstverständlich auch bei anderen Schnittstellen anwendbar.

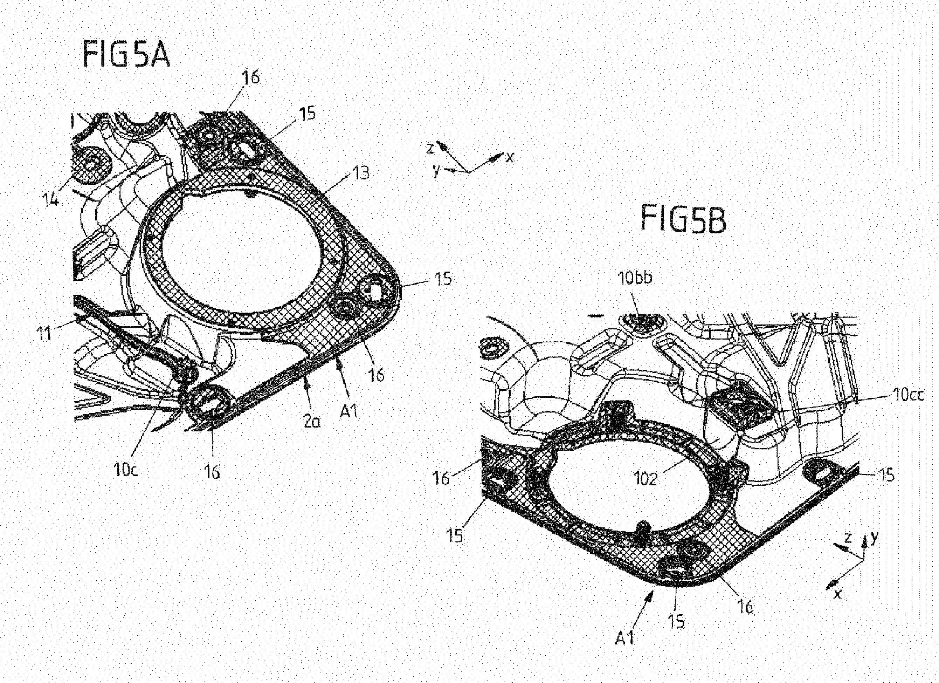

Anhand der Detaildarstellung der Figuren 5A und 5B ist einerseits der Flächenabschnitt A1 aus thermoplastischem Kunststoffmaterial näher veranschaulicht, der insbesondere die Schnittstelle 13 für den Lautsprecher ausbildet. Ferner sind hierin die Lager- oder Auflageflächen 10bb und 10cc sowie ein Schraubdom der Befestigungsstelle 10c für die Führungsschiene FS1 ersichtlich. Auf der Außenseite des Modulträgers 1 ist durch das Organoblech O eine Abstützung der durch die Auflagefläche 10cc für die Führungsschiene FS 1 definierten Schnittstelle vorgesehen. Das Organoblech O weist hier eine Wandung 102 auf, die sich als Abwinklung von einer durch das Organoblech O aufgespannten Hauptebene - vorliegend im Wesentlichen senkrecht hierzu - erstreckt und den angespritzten Flächenabschnitt A1 mit der angespritzten Lager- oder Auflagefläche 10cc verbindet und diesen abstützt.

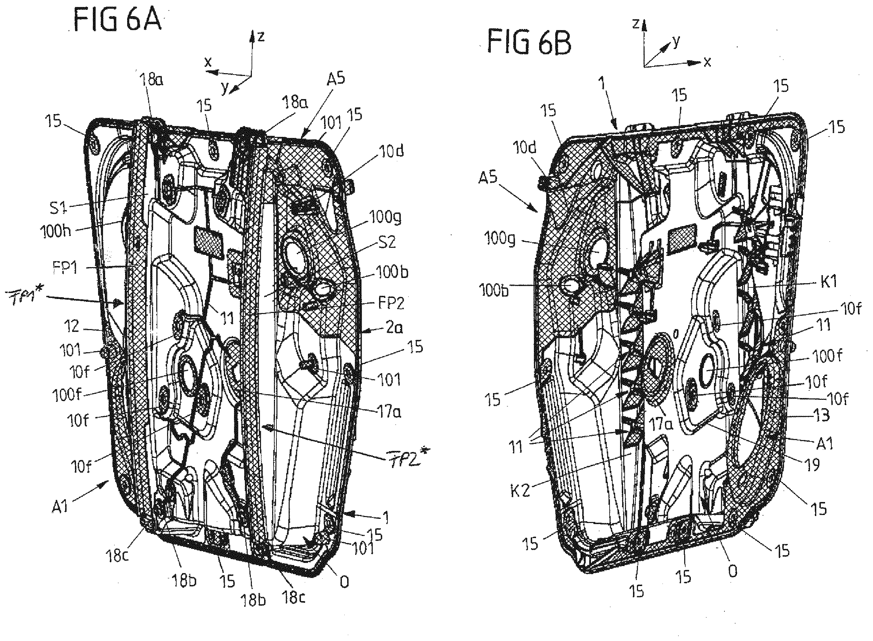

Die Figuren 6A bis 6C, 7A bis 7D, 8A bis 8B und 9A bis 9B zeigen eine weitere Ausführungsvariante eines erfindungsgemäßen Modulträgers 1 für eine Türmodul einer Kraftfahrzeugtür. Identische Elemente des Modulträgers 1 sind hierbei mit übereinstimmenden Bezugszeichen gekennzeichnet.

So bildet auch bei dem Modulträger 1 der Figuren 6A bis 9B eine randseitige Anspritzung aus thermoplastischem Kunststoffmaterial an ein Organoblech O mehrere Befestigungsöffnungen 15 für die Verbindung zum Türinnenblech 510 aus. An einem durch angespritztes Kunststoffmaterial ausgebildeten Rand des Modulträgers 1 ist vorliegend eine durchgehende, beispielsweise kanalartig ausgestaltete Aufnahme 12 vorgesehen. In diese Aufnahme 12 kann ein separat hergestelltes Dichtelement 2a eingesetzt sein oder ein Dichtelement 2a ist hierin - in einem nachfolgenden Spritzgießvorgang - angespritzt.

In Übereinstimmung zu dem zuvor erläuterten Ausführungsbeispiel der Figuren 1A bis 5B sind ferner auch hier durch angespritztes thermoplastisches Kunststoffmaterial mehrere Durchgangs- und Befestigungsöffnungen sowie Schraubdome 10d, 10f, 100b, 100f, 100g, 100h und 17a an dem Organoblech O des Modulträgers 1 ausgeformt. Hierbei ist in dieser Variante eine Durchgangsöffnung 100h für die Verbindung des Mitnehmers M1 mit der Fensterscheibe an einer Öffnung in dem Organoblech O ausgebildet. Eine weitere Durchgangsöffnung 100g für die Verbindung des anderen Mitnehmers M2 mit der Fensterscheibe ist demgegenüber vollständig durch an das Organoblech O angespritztes thermoplastisches Kunststoffmaterial ausgeformt.

Die Durchgangsöffnungen 100b und 100g sowie ein Schraubdom 10d und ein Positionierungszapfen 101 sind ferner durch einen Flächenabschnitt A5 aus thermoplastischem Kunststoffmaterial ausgeformt. Dieser Flächenabschnitt A5 ist an einem Randabschnitt R5 eines Randes R des Organoblechs O unter Umspritzung dieses Randabschnitts R5 angespritzt. Dabei definiert der Flächenabschnitt A5 mehr als 1/10, vorliegend sogar mehr als 1/8 der Oberfläche des Modulträgers 1 und bildet eine der vier Ecken des Modulträgers 1 vollständig aus.

An einem gegenüberliegenden Eckbereich des Modulträgers 1 ist ein weiterer Flächenabschnitt A1 aus thermoplastischem Kunststoffmaterial vorgesehen. Dieser ist an einem Randabschnitt R1 des Randes R des Organoblechs O ebenfalls unter Umspritzung dieses Randabschnitts R1 angespritzt. Der weitere Flächenabschnitt A1 bildet hierbei insbesondere die Befestigungsstelle 13 für den Lautsprecher zusätzlich zu mehreren Befestigungsöffnungen 15, einem Positionierungszapfen 101 und einem Teil der Aufnahme 12 für das umlaufende Dichtungselement 2a aus.

Über die Flächenabschnitte A1 und A2 aus angespritztem thermoplastischem Kunststoffmaterial ist ein nennenswerter Teil der Oberfläche des Modulträgers allein durch thermoplastisches Kunststoffmaterial definiert, vorliegend wenigstens 1/8 der Oberfläche. Über das angespritzte Kunststoffmaterial wird dabei dem Modulträger 1 die endgültige Form vorgegeben. Vorliegend werden hierdurch auch teilweise in verschiedenen Ebenen durch das Organoblech O aufgespannte Abschnitte gezielt miteinander verbunden.

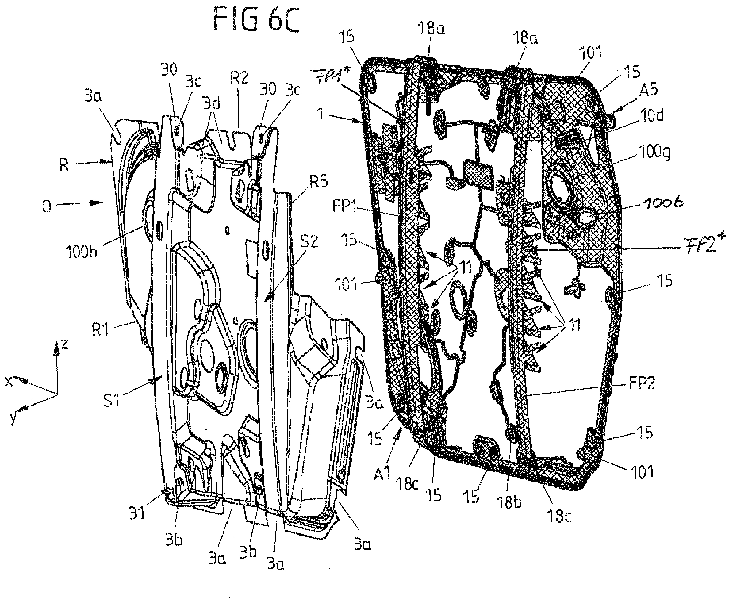

Dies ist insbesondere anhand der Figuren 6C veranschaulicht. Hier sind die angespritzten Bereiche und das Organoblech O mit seiner vorgegebenen Strukturierung in einer Explosionsdarstellung gezeigt. Hieraus ist insbesondere ersichtlich, dass ein Rand R des Organoblechs O unter anderem mehrere Freischnitte oder Aussparungen 3a, zueinander versetzte Anbindungsbereiche 3d sowie die später umspritzten Randabschnitte R1 und R5 aufweist, aufgrund derer das Organoblech O stark von einer Rechteckform abweicht. Eine im Wesentlichen rechteckförmige Grundfläche des Modulträgers 1 wird folglich erst durch die angespritzten Flächenabschnitte A1 und A5 gewonnen.

An dem Organoblech O der Figuren 6A bis 9B sind vorliegend zwei längserstreckte Sockel S1 und S2 ausgeformt. Diese stehen an dem Modulträger 1 an einer Außenseite vor und verlaufen im Wesentlichen - bezogen auf einen bestimmungsgemäß eingebauten Zustand des Modulträgers 1 - entlang der Vertikalrichtung z. Die längserstreckten, vorstehenden Sockel S1 und S2 bilden vorliegend ein Stabilitätsprofil je einer Führungsschiene FS1*, FS2*. Über dieses Stabilitätsprofil S1, S2 wird ein Großteil der im Betrieb des Fensterhebers auftretenden Querkräfte in das Organoblech O eingeleitet.

Für die gleitende Führung der Mitnehmer M1 und M2 an den Führungsschienen FS1* und FS2* ist ein Führungsprofil FP1, FP2 vorgesehen. Dieses Führungsprofil FP1 oder FP2 ist vorliegend jeweils durch angespritztes thermoplastisches Kunststoffmaterial ausgeformt. Die Führungsprofile FP 1 und FP 2 der beiden Führungsschienen FS1 * und FS2* sind somit durch an die Sockel S1 und S2 bzw. das hiermit gebildete Stabilitätsprofil angespritzt. Hiermit werden die unterschiedlichen von der Führungsschiene FS1* oder FS2* zu übernehmenden Funktionen durch unterschiedliche Materialien und Bereiche übernommen, durch das Stabilitätsprofil S1 oder S2 aus Organoblech O einerseits und durch das Führungsprofil FP1 oder FP2 aus angespritztem thermoplastischem Kunststoffmaterial andererseits. Es findet somit eine gezielte Funktionstrennung über die verwendeten Materialien und die von ihnen ausgebildeten Strukturen statt.

Um gerade im Bereich der Sockel S1 und S2 die Steifigkeit des Modulträgers 1 zu erhöhen, sind auf der Innenseite des Modulträgers 1 entsprechend der Figur 6B Versteifungsstrukturen 11 angespritzt. Durch die Ausformung der Sockel S1 und S2 auf der gegenüberliegenden Außenseite des Modulträgers 1 ist auf dessen Innenseite jeweils ein längserstreckter Kanal K1 oder K2 ausgeformt. In diesen Kanal sind die Versteifungsstrukturen 11 mit mehreren sich kreuzenden Rippen eingespritzt, sodass hierüber insbesondere die sich gegenüberliegenden Innenwände des jeweiligen Kanals K1 oder K2 miteinander verbunden sind.

Hierbei kann vorgesehen sein, dass zumindest ein Teil des thermoplastischen Kunststoffmaterials der Versteifungsstruktur 11 auf der Innenseite durch das Organoblech O des Modulträgers 1 hindurchgespritzt ist. Wird erst danach das jeweilige Führungsprofil FP1 oder FP2 an den zugehörigen Sockel S1 oder S2 angespritzt, ist das thermoplastischen Kunststoffmaterial des Führungsprofils FP1, FP2 wenigstens teilweise direkt mit dem durchgespritzten thermoplastischen Kunststoffmaterial der Versteifungsstruktur 11 verbunden. Alternativ kann grundsätzlich auch vorgesehen sein, zunächst ein Führungsprofil FP1, FP2 an den jeweiligen Sockel S1 oder S2 anzuspritzen, wobei wenigstens ein Teil des hierfür angespritzten thermoplastischen Kunststoffmaterials durch das Organoblech O hindurchgespritzt wird. Beim nachfolgenden Anspritzen der Versteifungsstruktur 11 auf der gegenüberliegenden Innenseite wird dann ebenfalls eine direkte Verbindung der beiden angespritzten Strukturen FP1 und 11 oder FP2 und 11 erreicht.

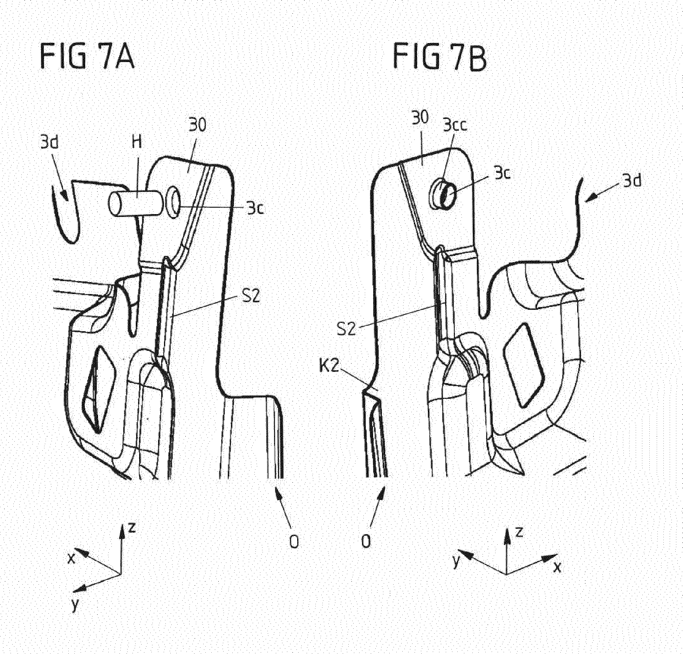

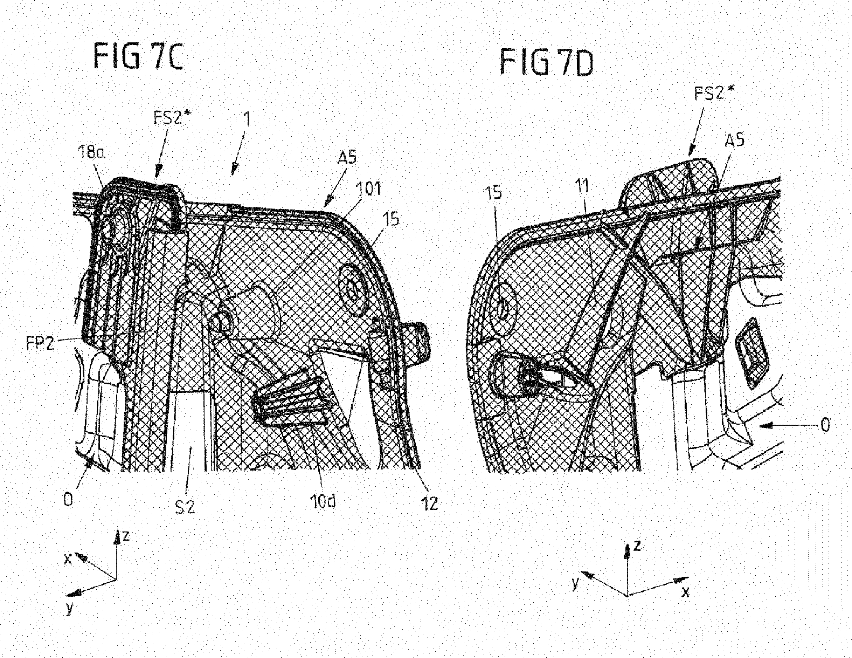

Anhand der Detaildarstellungen der Figuren 7A bis 7D ist der Bereich an einem oberen Ende der Führungsschiene FS2* des Modulträgers 1 näher veranschaulicht. Hierbei zeigen die Figuren 7A und 7B mit Blick auf die Außen- und die Innenseite des Modulträgers 1 zunächst einen Ausschnitt des hier vorliegenden Organoblechs O ohne das angespritzte thermoplastische Kunststoffmaterial. An dem sich an den Sockel S2 anschließenden Abschnitt aus Organoblech O ist ein Lagerabschnitt in Form einer Lagerlasche 30 für die spätere drehbare Lagerung einer Seilrolle des Fensterhebers ausgebildet. An der Lagerlasche 30 ist eine Bohrung oder ein Loch 3c mit einem auf der Innenseite der Lagerlasche 30 vorstehenden Kragen 3cc aus Organoblech O ausgebildet. In dieses Loch 3c ist eine Lagerhülse H eingesteckt, die durch das angespritzte thermoplastische Kunststoffmaterial in dem Loch 3c fixiert wird. Die Lagerhülse H dient dann der Aufnahme eines Bolzens für die drehbare Lagerung und axiale Sicherung der Seilrolle. Dies ist unter anderem in der vergrößerten Darstellung der Figuren 7C und 7D näher veranschaulicht.

Das angespritzte, die Lagerlasche 30 umgebende thermoplastische Kunststoffmaterial geht in diesem Bereich nahtlos in das Kunststoffmaterial des Flächenabschnitts A5 und das angespritzte Führungsprofil FP2 über. Über das angespritzte thermoplastische Kunststoffmaterial ist in diesem Bereich auch ein etwaiger Versatz zwischen den an dem Organoblech O ausgebildeten Strukturen ausgeglichen. So liegen an dem Organoblech O insbesondere im Bereich der Lagerlasche 30 und dem hieran angrenzenden Anbindungsbereich 3d mehrere Bereiche des Organoblechs O nicht in einer gemeinsamen Ebene, sondern sind insbesondere quer zu einer von dem Organoblech O aufgespannten Hauptebene des Modulträgers 1 zueinander versetzt. Über das randseitig angespritzte Kunststoffmaterial wird hier ein solcher Versatz ausgeglichen und insbesondere ein geradlinig verlaufender und sich an angrenzende, in einer Dichtebene liegende Abschnitte anschließender Dichtkanal durch die Aufnahme 12 ausgebildet.

Durch das angespritzte thermoplastische Kunststoffmaterial werden hierbei insbesondere Freiräume zwischen aneinander angrenzenden Bereichen des Organoblechs O geschlossen, die sich durch eine lokale Auftrennung des Organoblechs O und eine anschließende Ausformung eines Materialbereichs, wie zum Beispiel der Lagerlasche 30, ergeben haben. Darüber hinaus wird durch das im Bereich der Lagerlasche 30 angespritzte thermoplastische Kunststoffmaterial eine Lagerstelle 18a ausgebildet sowie eine Versteifungsstruktur 11 mit mehreren Versteifungsstegen oder -rippen.

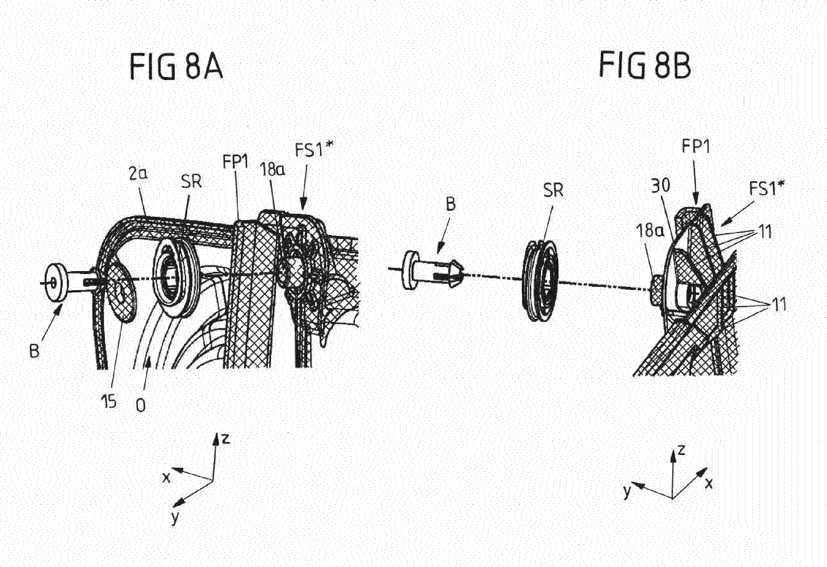

Anhand der Detaildarstellung in der Figuren 8A und 8B ist insbesondere die Festlegung einer Seilrolle SR an der durch thermoplastisches Kunststoffmaterial ausgebildeten Lagerstelle 18a im Bereich des oberen Endes der Führungsschiene FS1* veranschaulicht. Hierbei ist auch an dem randnahen Ende des Sockels S1 für die Führungsschiene FS1* eine Lagerlasche 30 durch das Organoblech O ausgebildet. An dieser Lagerlasche 30 ist thermoplastisches Kunststoffmaterial angespritzt, um über einen hülsenförmigen Fortsatz die Lagerstelle 18a für die Seilrolle SR auszubilden. Zur Versteifung ist die Lagerlasche 30 zudem mit thermoplastischem Kunststoffmaterial hinterspritzt, das mehrere Rippen einer Versteifungsstruktur 11 ausbildet. Über die im Wesentlichen analog zu einer Lagerstelle gemäß den Figuren 7A bis 7D ausgebildete Lagerstelle 18a ist die Seilrolle SR zur Umlenkung des Seilzugs Z drehbar gelagert. Hierfür wird die Seilrolle SR auf den hülsenförmigen Fortsatz der Lagerstelle 18a aus thermoplastischem Kunststoffmaterial aufgesteckt und hieran über einen angeklipsten Bolzen B axial gesichert.

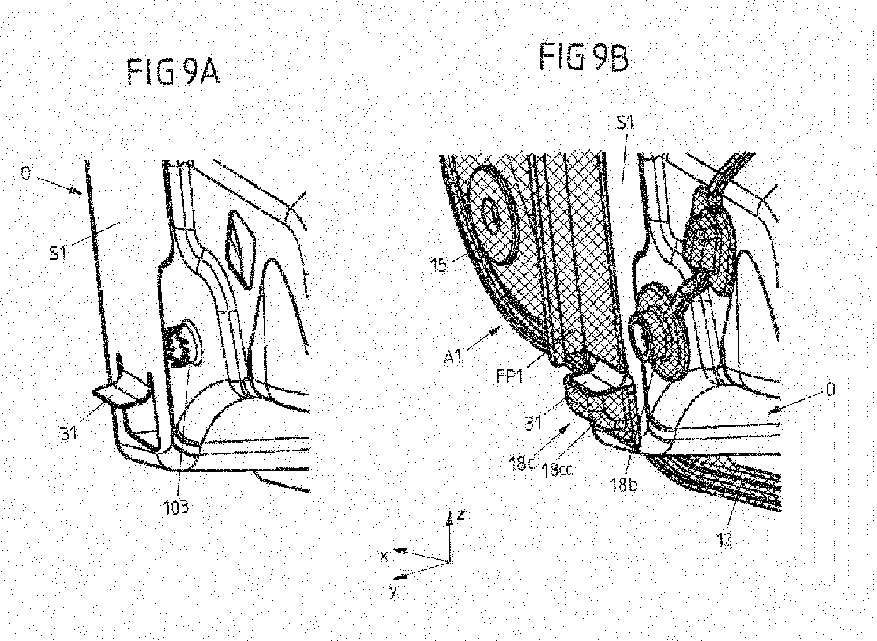

Anhand der Figuren 9A und 9B ist einerseits ein vergrößerter Ausschnitt des Flächenabschnitts A1 aus thermoplastischem Kunststoffmaterial sowie ein unteres Ende der Führungsschiene FS1* veranschaulicht. Hierbei ist mittels der Figuren 9A und 9B veranschaulicht, dass an einem sich an den Sockel S1 anschließenden Bereich aus Organoblech O ein Anschlagbereich 31 über einen herausgeformten Materialbereich des Organoblechs O gebildet ist. Der Anschlagbereich ist hier als Anschlaglasche 31 ausgeführt, die über einen U-förmigen Schnitt in das Organoblech O frei geschnitten und quer zu der von dem Organoblech O aufgespannten Hauptebene herausgebogen wurde.

Zur Ausbildung eines Anschlagelements 18c, über das eine untere Verstellposition eines Mitnehmers M1 (oder M2) entlang der Führungsschiene FS1* (oder FS2*) vorgegeben wird, ist an die Anschlaglasche 31 thermoplastisches Kunststoffmaterial angespritzt. Dieses Kunststoffmaterial bildet dann eine in Verstellrichtung des Mitnehmers M1 (M2) liegende Stützstruktur 18cc und füllt hierbei einen durch das Herausformen der Anschlaglasche 31 aus dem Organoblech O gebildeten Freiraum aus. Hierdurch ist die Lagerlasche 31 mit den hieran angrenzenden Bereichen aus Organoblech O verbunden in ihrer Position stabilisiert.

Quer zur Längserstreckungsrichtung des Sockels S1 ist an dem Organoblech O noch eine Ausstülpung 103 zur Definition einer weiteren Lagerstelle 18b für eine weitere Seilrolle ausgebildet. Diese Ausstülpung 103 weist an ihrem freien vorstehenden Ende eine unregelmäßige Kontur auf. Vorliegend ist das Ende mehrfach gezackt. Hierüber ist eine verbesserte verdrehsichere Verbindung des angespritzten thermoplastischen Kunststoffmaterials mit der Ausstülpung 103 aus Organoblech O erreicht. So ist hier dann die Ausstülpung 103 nicht nur stoff-, sondern auch formschlüssig mit dem angespritzten thermoplastischen Kunststoffmaterial verbunden.

Durch die Kombination eines zumindest teilweise bereits mit Ausformungen versehenen Organoblechs O und hieran teilweise großflächig angespritzten Bereiche aus thermoplastischem Kunststoffmaterial, um einerseits Schnittstellen und Durchgangsöffnungen für Funktionselemente und einen Dichtungsrand auszubilden, kann eine Modulträger 1 mit geringerem Gewicht und gegebenenfalls auch leichter belastungsoptimiert hergestellt werden. Indem etwaige Durchgangs- und/oder Befestigungsöffnungen nicht oder zumindest nicht ausschließlich durch das Organoblech O selbst ausgebildet werden müssen, sondern durch hieran angespritztes thermoplastisches Kunststoffmaterial, lassen sich Durchgangs- und Befestigungsöffnungen mit vergleichsweise geringen Toleranzen leichter durch das thermoplastische Kunststoffmaterial verwirklichen.

### Bezugszeichenliste

- 1: Modulträger
- 100a - 100h: Durchgangsöffnung
- 101: Positionierungszapfen (Schnittstelle)
- 102: Wandung
- 103: Ausstülpung
- 10a, 10b, 10c: Befestigungsstelle für Führungsschiene (Schnittstelle)
- 10aa, 10bb, 10cc: Lager-/ Auflagefläche (Schnittstelle)
- 10d, 10e: Befestigungsöffnung / Schraubdom (Schnittstelle)
- 10f: Befestigungsöffnung für Fensterheberantrieb (Schnittstelle)
- 11: Stütz- oder Versteifungsstruktur
- 12: Aufnahme für Dichtung
- 13: Befestigungsstelle für Lautsprecher (Schnittstelle)
- 14: Befestigungsstelle für Steuergerät (Schnittstelle)
- 15: Befestigungsöffnung für Verbindung zum Türinnenblech (Schnittstelle)
- 16: Befestigungsöffnung für Türinnenverkleidung (Schnittstelle)
- 17a: Befestigungsstelle für Airbagsensor (Schnittstelle)
- 17b: Befestigungsstelle für Türzuziehgriff (Schnittstelle)
- 18a, 18b: Lagerstelle für Umlenkelement (Schnittstelle)
- 18c, 18d: Anschlagelement
- 18cc: Angespritzte Stützstruktur für Anschlagelement
- 19: Lagerstelle für Fensterheberantrieb
- 190: Schalldämmwand (Funktionselement)
- 2a, 2b: Dichtungselement
- 30: Lagerlasche (Lagerabschnitt)
- 31: Anschlaglasche (Anschlagbereich)
- 3a: Aussparung
- 3b: Hülsenförmiger Fortsatz / Durchzug
- 3c: Loch
- 3cc: Kragen
- 3d: Anbindungsbereich
- 5: Türstruktur
- 50: Fensterrahmenstruktur
- 51: Türkasten
- 510: Türinnenblech
- 52: Brüstungsbegrenzung
- A: Aussparung
- A1 - A5: Angespritzter randseitiger Flächenabschnitt
- B: Bolzen
- FP1, FP2: Führungsprofil
- FS1, FS1*, FS2, FS2*: Führungsschiene
- H: Lagerhülse
- K1, K2: Kanal
- M: Lagerplatte mit Seiltrommel
- M1, M2: Mitnehmer
- O: Organoblech
- R: Rand des Organoblechs
- R1, R2, R5: Randabschnitt
- S1, S2: Sockel / Stabilitätsprofil
- SR: Seilrolle (Umlenkelement)
- T: Türmodul
- Z: Seilzug (Zugmittel)

## Patentansprüche

1. Modulträger für ein Türmodul einer Kraftfahrzeugtür, wobei an dem Modulträger (1) wenigstens ein Funktionselement (FS1, FS1*, FS2, FS2*, M, Z) festzulegen ist und wobei der Modulträger (1) zu einem wesentlichen Teil durch ein Organoblech (O) gebildet ist und durch einen umlaufenden äußeren Rand mit mindestens einem Dichtelement (2a, 2b) begrenzt ist, und wobei an dem Modulträger (1)
- eine Mehrzahl von Schnittstellen (15; 10a-10f, 13-14, 16, 17a, 17b, 18a, 18b, 19, 101) einerseits zur Festlegung des Modulträgers (1) an einer Türstruktur (5) einer Kraftfahrzeugtür und andererseits zur Verbindung des wenigstens einen Funktionselements (FS1, FS1*, FS2, FS2*, M, Z) und/oder weiterer Komponenten des Türmoduls (T) mit dem Modulträger (1) vorgesehen sind,
**dadurch gekennzeichnet, dass**
- an dem äußeren Rand des Modulträgers (1) mindestens eine erste Anspritzung aus thermoplastischem Kunststoffmaterial vorgesehen ist, die einen zentralen Bereich des Modulträgers (1) zumindest teilweise berandet und die mindestens eine Schnittstelle (15) zur Festlegung des Modulträgers (1) an einer Türstruktur (5) einer Kraftfahrzeugtür und/oder zur Festlegung einer weiteren Komponente der Kraftfahrzeugtür an dem Modulträger (1) definiert und/oder ein randseitiges Dichtungselement (2a, 2b) des Modulträgers (1) aufnimmt oder ausbildet, wobei ein Rand (R) des Organoblechs (O) mit thermoplastischem Kunststoffmaterial derart umspritzt ist, dass über die erste Anspritzung aus thermoplastischem Kunststoffmaterial ein das Organoblech (O) ergänzender und die Oberfläche des Modulträgers (1) mitdefinierender Abschnitt (A1- A5) gebildet ist, der einen Bereich des äußeren Randes des Modulträgers (1) ausbildet, in dem kein Organoblech (O) vorliegt, und
- zumindest in dem zentralen Bereich des Modulträgers (1) mindestens eine zweite Anspritzung aus thermoplastischem Kunststoffmaterial an dem Modulträger (1) vorgesehen ist, die eine Schnittstelle (10a-10f; 10aa, 10bb, 10cc, 14, 17a, 17b, 18a, 18b) für ein an dem Modulträger (1) festzulegendes Funktionselement (FS1, FS2, M, Z) und/oder eine Durchgangsöffnung (100a-100h) definiert und/oder die zumindest einen Abschnitt eines Funktionselements (FS1*, FS2*) ausbildet.

2. Modulträger nach Anspruch 1, **dadurch gekennzeichnet, dass** die erste, randseitige Anspritzung mindestens einen sich flächig erstreckenden Abschnitt (A1-A5) des Modulträgers (1) ausbildet und/oder sich an dem gesamten äußeren Rand des Modulträgers (1) entlang erstreckt.

3. Modulträger nach Anspruch 1 oder 2, **dadurch gekennzeichnet, dass** in der ersten randseitigen Anspritzung eine Befestigungsöffnung (15) als Schnittstelle zur Festlegung des Modulträgers (1) an einer Türstruktur (5) ausgeformt ist, wobei die Befestigungsöffnung (15) vollständig durch das an das Organoblech (O) angespritzte thermoplastische Kunststoffmaterial im Bereich des äußeren Randes des Modulträgers (1) ausgebildet ist, ohne dass hierfür ein Rand (R) des Organoblechs (O) selbst einen Teil einer Funktionsfläche der auszubildenden Schnittstelle bildet.

4. Modulträger nach einem der Ansprüche 1 bis 3, **dadurch gekennzeichnet, dass**
- durch die erste, randseitige Anspritzung mindestens eine Aufnahme (12) ausgeformt ist, die das mindestens eine Dichtelement (2a, 2b) zumindest teilweise aufnimmt, und/oder
- durch die erste, randseitige Anspritzung mindestens eine Schnittstelle (13) für die Festlegung eines Lautsprechers an dem Modulträger (1) und/oder ein Schraubdom (10d) ausgeformt ist und/oder
- in der ersten, randseitigen Anspritzung mindestens eine Durchgangsöffnung (100b, 100g) für die Durchführung eines Kabels oder eines Gestänges durch den Modulträger (1) hindurch und/oder eine Durchgangsöffnung (100g) für die Montage eines Fensterhebers an den Modulträger (1) ausgeformt ist.

5. Modulträger nach einem der vorhergehenden Ansprüche, **dadurch gekennzeichnet, dass** durch die zweite, in dem zentralen Bereich vorgesehene Anspritzung
- eine Schnittstelle (10a - 10c, 10aa, 10bb, 10cc) für die Festlegung einer Führungsschiene (FS1, FS2) eines Fensterhebers und/oder
- eine Schnittstelle (10f) für die Festlegung eines Antriebs (M) eines Fensterhebers und/oder
- eine Schnittstelle (14) für die Festlegung eines Steuergeräts und/oder
- eine Schnittstelle (17a) für die Festlegung eines Airbagsensors und/oder
- eine Schnittstelle (17b) für die Festlegung eines Türzuziehgriffs und/oder
- eine Schnittstelle (18a, 18b) für die Festlegung einer Umlenkelements (SR), über das ein Zugmittel (Z) eines Fensterhebers umgelenkt wird, und/oder
- eine Schalldämmwand (190)
ausgeformt ist.

6. Modulträger nach einem der vorhergehenden Ansprüche, **dadurch gekennzeichnet, dass** durch die zweite, in dem zentralen Bereich vorgesehene Anspritzung eine Durchgangsöffnung (100a-100f) für die Durchführung eines Kabels, eines Gestänges und/oder eine Antriebswelle eines Antriebs (M) für einen Fensterheber durch den Modulträger (1) hindurch und/oder eine Durchgangsöffnung (100g-100h) für ein Werkzeug zur Montage eines Fensterhebers an den Modulträger (1) ausgeformt ist.

7. Modulträger nach einem der vorhergehenden Ansprüche, **dadurch gekennzeichnet, dass** durch die zweite, in dem zentralen Bereich vorgesehene Anspritzung mindestens ein Abschnitt (FP1, FP2) einer Führungsschiene (FS1*, FS2*) eines Fensterhebers ausgeformt ist.

8. Modulträger nach Anspruch 7, **dadurch gekennzeichnet, dass** durch die mindestens eine zweite Anspritzung ein Führungsprofil (FP1, FP2) der Führungsschiene (FS1*, FS2*) ausgebildet ist, über das eine Führungsbahn für einen an der Führungsschiene (FS1*, FS2*) verschieblich geführten Mitnehmer (M1, M2) vorgegeben ist.

9. Modulträger nach Anspruch 8, **dadurch gekennzeichnet, dass** das Führungsprofil (FP1, FP2) an ein Stabilitätsprofil (S1, S2) der Führungsschiene (FS1*, FS2*) angespritzt ist, das dazu eingerichtet ist, die im Betrieb des Fensterhebers auftretenden Kräfte aufzunehmen, und das durch einen an dem Modulträger (1) vorstehenden, längserstreckten Sockel (S1, S2) aus Organoblech (O) ausgebildet ist.

10. Modulträger nach einem der vorhergehenden Ansprüche, **dadurch gekennzeichnet, dass**
- zumindest ein Abschnitt einer Führungsschiene (FS1*, FS2*) als Funktionselement des Modulträgers (1) durch einen an dem Modulträger (1) vorstehenden, längserstreckten Sockel (S1, S2) aus Organoblech (O) ausgebildet ist oder ein an dem Modulträger (1) vorstehenden, längserstreckter Sockel aus Organoblech (O) eine Schnittstelle für die Festlegung der Führungsschiene (FS1, FS2) definiert und
- der Sockel (S1, S2) auf einer ersten Seite des Modulträgers (1) vorsteht und auf einer gegenüberliegenden zweiten Seite des Modulträgers (1) einen längserstreckten Kanal (K1, K2) definiert.

11. Modulträger nach Anspruch 10, **dadurch gekennzeichnet, dass** durch die wenigstens eine zweite, in dem zentralen Bereich vorgesehene Anspritzung mindestens eine Stütz- oder Verstreifungsstruktur (11) zur lokalen Erhöhung der Belastbarkeit und/oder Steifigkeit in dem längserstreckten Kanal (K1, K2) auf der zweiten Seite des Modulträgers (1) ausgebildet ist.

12. Modulträger nach Anspruch 11, **dadurch gekennzeichnet, dass** zumindest ein Teil des thermoplastischen Kunststoffmaterials der Stütz- oder Versteifungsstruktur (11) durch das Organoblech (O) des Modulträgers (1) hindurchgespritzt ist.

13. Modulträger nach den Ansprüchen 7 und 12, **dadurch gekennzeichnet, dass** die Stütz- oder Versteifungsstruktur (11) mittels zumindest einer lokalen Durchspritzung durch das Organoblech (O) des Modulträgers (1) wenigstens teilweise direkt mit dem angespritzten thermoplastischen Kunststoffmaterial für einen Abschnitt (FP1, FP2) der Führungsschiene (FS1*, FS2*) verbunden ist.

14. Modulträger nach einem der vorhergehenden Ansprüche, **dadurch gekennzeichnet, dass** sich eine Wandung (102) des Modulträgers (1), die an eine aus angespritztem thermoplastischen Kunststoffmaterial gebildete Schnittstelle zur Festlegung eines Lautsprechers angrenzt, derart ausgebildet ist, dass sich diese Wandung (102) zumindest abschnittsweise in Form einer Abwinklung von einer Hauptebene des Modulträgers (1), entlang der sich der Modulträger (1) im Wesentlichen flächig erstreckt, in Richtung einer aus angespritztem thermoplastischen Kunststoffmaterial gebildete Schnittstelle (10cc) zur Festlegung einer Führungsschiene (FS1) erstreckt und eine Stützstruktur für die Abstützung der Schnittstelle (10cc) zur Festlegung der Führungsschiene (FS1) bildet.

15. Verfahren zur Herstellung eines Modulträgers für ein Türmodul einer Kraftfahrzeugtür, insbesondere eines Modulträgers nach einem der Ansprüche 1 bis 28, wobei an dem Modulträger (1) wenigstens ein Funktionselement (FS1, FS1*, FS2, FS2*, M, Z) festzulegen ist und wobei der Modulträger (1) zu einem wesentlichen Teil durch ein Organoblech (O) gebildet wird und durch einen umlaufenden äußeren Rand mit mindestens einem Dichtelement (2a, 2b) begrenzt wird, und wobei an dem Modulträger (1)
- eine Mehrzahl von Schnittstellen (15; 10a-10f, 10aa, 10bb, 10cc, 13-14, 16, 17a, 17b, 18a, 18b, 19, 101) einerseits zur Festlegung des Modulträgers (1) an einer Türstruktur (5) einer Kraftfahrzeugtür und andererseits zur Verbindung des wenigstens einen Funktionselements (FS1, FS1*, FS2, FS2*, M, Z) und/oder weiterer Komponenten des Türmoduls (T) mit dem Modulträger (1) vorgesehen werden
**dadurch gekennzeichnet, dass**
- an dem äußeren Rand des Modulträgers (1) mindestens eine erste Anspritzung aus thermoplastischem Kunststoffmaterial vorgesehen wird, die einen zentralen Bereich des Modulträgers (1) zumindest teilweise berandet und die mindestens eine Schnittstelle (15) zur Festlegung des Modulträgers (1) an einer Türstruktur (5) einer Kraftfahrzeugtür und/oder zur Festlegung einer weiteren Komponente der Kraftfahrzeugtür an dem Modulträger (1) definiert und/oder ein randseitiges Dichtungselement (2a, 2b) des Modulträgers (1) aufnimmt oder ausbildet, wobei ein Rand (R) des Organoblechs (O) mit thermoplastischem Kunststoffmaterial derart umspritzt wird, dass über die erste Anspritzung aus thermoplastischem Kunststoffmaterial ein das Organoblech (O) ergänzender und die Oberfläche des Modulträgers (1) mitdefinierender Abschnitt (A1- A5) gebildet ist, der einen Bereich des äußeren Randes des Modulträgers (1) ausbildet, in dem kein Organoblech (O) vorliegt, und
- zumindest in dem zentralen Bereich des Modulträgers (1) mindestens eine zweite Anspritzung aus thermoplastischem Kunststoffmaterial an dem Modulträger (1) vorgesehen wird, die eine Schnittstelle (10a-10f, 10aa, 10bb, 10cc, 14, 17a, 17b, 18a, 18b) für ein an dem Modulträger (1) festzulegendes Funktionselement (FS1, FS2, M, Z)und/oder eine Durchgangsöffnung (100a-100h) definiert und/oder die zumindest einen Abschnitt eines Funktionselements (FS1*, FS2*) ausbildet.

## Claims

1. A module carrier for a door module of a motor vehicle door, wherein at least one functional element (FS1, FS1*, FS2, FS2*, M, Z) is to be fixed to the module carrier (1), and wherein the module carrier (1) is formed substantially by an organic sheet (O) and is delimited by an encircling outer edge with at least one sealing element (2a, 2b), and wherein, on the module carrier (1),
- there is provided a multiplicity of interfaces (15; 10a-10f, 13-14, 16, 17a, 17b, 18a, 18b, 19, 101) firstly for fixing the module carrier (1) to a door structure (5) of a motor vehicle door and secondly for connecting the at least one functional element (FS1, FS1*, FS2, FS2*, M, Z) and/or further components of the door module (T) to the module carrier (1),
**characterized in that**,
- on the outer edge of the module carrier (1), there is provided at least one first molded-on portion composed of thermoplastics material, which at least partially borders a central region of the module carrier (1) and defines the at least one interface (15) for the fixing of the module carrier (1) to a door structure (5) of a motor vehicle door and/or for the fixing of a further component of the motor vehicle door to the module carrier (1) and/or receives or forms an edge-side seal element (2a, 2b) of the module carrier (1), wherein an edge (R) of the organic sheet (O) is encapsulated with thermoplastics material such that a section (A1-A5) which supplements the organo sheet (O) and also co-defines the surface of the module carrier (1) is formed by means of the first molded-on portion composed of thermoplastics material, which portion forms a region of the outer edge of the module carrier (1) in which no organo sheet (O) is present, and,
- at least in the central region of the module carrier (1), there is provided on the module carrier (1) at least one second molded-on portion composed of thermoplastics material which defines an interface (10a-10f; 10aa, 10bb, 10cc, 14, 17a, 17b, 18a, 18b) for a functional element (FS1, FS2, M, Z) to be fixed to the module carrier (1) and/or defines a passage opening (100a-100h) and/or which forms at least one section of a functional element (FS1*, FS2*).

2. The module carrier as claimed in claim 1, **characterized in that** the first, edge-side molded-on portion forms at least one areally extending section (A1-A5) of the module carrier (1) and/or extends along the entire outer edge of the module carrier (1).

3. The module carrier as claimed in claim 1 or 2, **characterized in that,** in the first, edge-side molded-on portion, there is formed at least one fastening opening (15) as an interface for the fixing of the module carrier (1) to a door structure (5), wherin the fastening opening (15) is formed entirely by the thermoplastics material that is molded onto the organic sheet (O) in the region of the outer edge of the module carrier (1), without an edge (R) of the organic sheet (O) itself forming, for this purpose, a part of the functional surface of an interface to be formed.

4. The module carrier as claimed in one of claims 1 to 3, **characterized in that**
- the first, edge-side molded-on portion forms at least one receptacle (12) which at least partially receives the at least one sealing element (2a, 2b), and/or
- the first, edge-side molded-on portion forms at least one interface (13) for the fixing of a loudspeaker to the module carrier (1) and/or a screw boss (10d) and/or
- in the first, edge-side molded-on portion, there is formed at least one passage opening (100b, 100g) for the leadthrough of a cable or of a linkage through the module carrier (1), and/or a passage opening (100g) for the mounting of a window regulator on the module carrier (1).

5. The module carrier as claimed in one of the preceding claims, **characterized in that** the second molded-on portion, which is provided in the central region, forms
- an interface (10a - 10c, 10aa, 10bb, 10cc) for the fixing of a guide rail (FS1, FS2) of a window regulator, and/or
- an interface (10f) for the fixing of a drive (M) of a window regulator, and/or
- an interface (14) for the fixing of a control unit, and/or
- an interface (17a) for the fixing of an airbag sensor, and/or
- an interface (17b) for the fixing of a door pull-closed handle, and/or
- an interface (18a, 18b) for the fixing of a diverting element (SR) over which a traction mechanism (Z) of a window regulator is diverted, and/or
- a sound-insulating wall (190).

6. The module carrier as claimed in one of the preceding claims, **characterized in that** the second molded-on portion, which is provided in the central region, forms a passage opening (100a-100f) for the leadthrough of a cable, of a linkage and/or forms a drive shaft of a drive (M) for a window regulator through the module carrier (1) and/or forms a passage opening (100g-100h) for a tool for the mounting of a window regulator on the module carrier (1).

7. The module carrier as claimed in one of the preceding claims, **characterized in that** the second molded-on portion, which is provided in the central region, forms at least one section (FP1, FP2) of a guide rail (FS1*, FS2*) of a window regulator.

8. The module carrier as claimed in claim 7, **characterized in that** the at least one second molded-on portion forms a guide profile (FP1, FP2) of the guide rail (FS1*, FS2*), by means of which a guide track for a driver (M1, M2) guided displaceably on the guide rail (FS1*, FS2*) is predefined.

9. The module carrier as claimed in claim 8, **characterized in that** the guide profile (FP1, FP2) is molded onto a stability profile (S1, S2) of the guide rail (FS1*, FS2*), which stability profile is designed to accommodate the forces that arise during the operation of the window regulator and is formed by a longitudinally extending pedestal (S1, S2) composed of organic sheet (O) which protrudes on the module carrier (1).

10. The module carrier as claimed in one of the preceding claims, **characterized in that**
- at least one section of a guide rail (FS1*, FS2*) as a functional element of the module carrier (1) is formed by a longitudinally extending pedestal (S1, S2) which protrudes on the module carrier (1) and which is composed of organic sheet (O), or a longitudinally extending pedestal which protrudes on the module carrier (1) and which is composed of organic sheet (O) defines an interface for the fixing of the guide rail (FS1, FS2), and
- the pedestal (S1, S2) protrudes on a first side of the module carrier (1) and, on an opposite, second side of the module carrier (1), defines a longitudinally extending channel (K1, K2).

11. The module carrier as claimed in claim 10, **characterized in that** the at least one second molded-on portion provided in the central region forms at least one support or stiffening structure (11) for locally increasing the load-bearing capacity and/or stiffness in the longitudinally extending channel (K1, K2) on the second side of the module carrier (1).

12. The module carrier as claimed in claim11, **characterized in that** at least a part of the thermoplastics material of the support or stiffening structure (11) is molded through the organic sheet (O) of the module carrier (1).

13. The module carrier as claimed in claims 7 and 12, **characterized in that** the support or stiffening structure (11) is, by means of at least one local through-molding through the organic sheet (O) of the module carrier (1), at least partially connected directly to the molded-on thermoplastics material for a section (FP1, FP2) of the guide rail (FS1*, FS2*).

14. The module carrier as claimed in one of the preceding claims, **characterized in that** a wall (102) of the module carrier (1), which wall adjoins an interface, formed from molded-on thermoplastics material, for the fixing of a loudspeaker, is formed such that said wall (102) extends at least in sections in the form of an angled portion out of a main plane of the module carrier (1), along which the module carrier (1) extends substantially areally, in the direction of an interface (10cc), formed from molded-on thermoplastics material, for the fixing of a guide rail (FS1), and said wall forms a support structure for the support of the interface (10cc) for the fixing of the guide rail (FS1).

15. A method for producing a module carrier for a door module of a motor vehicle door, in particular a module carrier as claimed in one of claims 1 to 28, wherein at least one functional element (FS1, FS1*, FS2, FS2*, M, Z) is to be fixed to the module carrier (1), and wherein the module carrier (1) is formed substantially by an organic sheet (O) and is delimited by an encircling outer edge with at least one sealing element (2a, 2b), and wherein, on the module carrier (1),
- there is provided a multiplicity of interfaces (15; 10a-10f, 10aa, 10bb, 10cc, 13-14, 16, 17a, 17b, 18a, 18b, 19, 101) firstly for fixing the module carrier (1) to a door structure (5) of a motor vehicle door and secondly for connecting the at least one functional element (FS1, FS1*, FS2, FS2*, M, Z) and/or further components of the door module (T) to the module carrier (1),
**characterized in that**,
- on the outer edge of the module carrier (1), there is provided at least one first molded-on portion composed of thermoplastics material, which at least partially borders a central region of the module carrier (1) and defines the at least one interface (15) for the fixing of the module carrier (1) to a door structure (5) of a motor vehicle door and/or for the fixing of a further component of the motor vehicle door to the module carrier (1) and/or receives or forms an edge-side seal element (2a, 2b) of the module carrier (1), , wherein an edge (R) of the organic sheet (O) is being encapsulated with thermoplastics material such that a section (A1-A5) which supplements the organo sheet (O) and also co-defines the surface of the module carrier (1) is formed by means of the first molded-on portion composed of thermoplastics material, which portion forms a region of the outer edge of the module carrier (1) in which no organo sheet (O) is present, and,
- at least in the central region of the module carrier (1), there is provided on the module carrier (1) at least one second molded-on portion composed of thermoplastics material which defines an interface (10a-10f, 10aa, 10bb, 10cc, 14, 17a, 17b, 18a, 18b) for a functional element (FS1, FS2, M, Z) to be fixed to the module carrier (1) and/or defines a passage opening (100a-100h) and/or which forms at least one section of a functional element (FS1*, FS2*).

## Revendications

1. Support de module pour un module de porte d'une porte de véhicule automobile, dans lequel au moins un élément fonctionnel (FS1, FS1*, FS2, FS2*, M, Z) doit être fixé au niveau du support de module (1) et dans lequel le support de module (1) est formé pour l'essentiel par une tôle organique (O) et est délimité par un bord extérieur périphérique avec au moins un élément d'étanchéité (2a, 2b), et dans lequel au niveau du support de module (1)
- une pluralité d'interfaces (15 ; 10a-10f, 13-14, 16, 17a, 17b, 18a, 18b, 19, 101) sont prévues d'un côté pour la fixation du support de module (1) au niveau d'une structure de porte (5) d'une porte de véhicule automobile et d'un autre côté pour la liaison de l'au moins un élément fonctionnel (FS1, FS1*, FS2, FS2*, M, Z) et/ou d'autres composants du module de porte (T) au support de module (1),
**caractérisé en ce que**
- au niveau du bord extérieur du support de module (1) est prévu au moins un premier moulage par injection en matériau plastique thermoplastique, qui borde au moins en partie une zone centrale du support de module (1) et qui définit au moins une interface (15) pour la fixation du support de module (1) au niveau d'une structure de porte (5) d'une porte de véhicule automobile et/ou pour la fixation d'un autre composant de la porte de véhicule automobile au niveau du support de module (1) et/ou reçoit ou forme un élément d'étanchéité (2a, 2b) du support de module (1) côté bord, dans lequel un bord (R) de la tôle organique (O) est surmoulé avec un matériau plastique thermoplastique de sorte qu'une section (A1-A5) complétant la tôle organique (O) et codéfinissant la surface du support de module (1), qui réalise une zone du bord extérieur du support de module (1), dans laquelle il n'y a pas de tôle organe (O), est formée au-dessus du premier moulage par injection en matériau plastique thermoplastique, et
- au moins un deuxième moulage par injection en matériau plastique thermoplastique au niveau du support de module (1), qui définit une interface (10a-10f ; 10aa, 10bb, 10cc, 14, 17a, 17b, 18a, 18b) pour un élément fonctionnel (FS1, FS2, M, Z) à fixer au niveau du support de module (1) et/ou une ouverture traversante (100a-100h) et/ou qui réalise au moins une section d'un élément fonctionnel (FS1*, FS2*), est prévu au moins dans la zone centrale du support de module (1).

2. Support de module selon la revendication 1, **caractérisé en ce que** le premier moulage par injection côté bord forme au moins une section s'étendant à plat (A1-A5) du support de module (1) et/ou s'étend le long de l'ensemble du bord extérieur du support de module (1).

3. Support de module selon la revendication 1 ou 2, **caractérisé en ce qu'**une ouverture de fixation (15) est moulée en tant qu'interface pour la fixation du support de module (1) au niveau d'une structure de porte (5) dans le premier moulage par injection côté bord, dans lequel l'ouverture de fixation (15) est entièrement réalisée par le matériau plastique thermoplastique moulé par injection au niveau de la tôle organique (O) dans la zone du bord extérieur du support de module (1) sans qu'un bord (R) de la tôle organique (O) proprement dite forme une partie d'une surface fonctionnelle de l'interface à réaliser.

4. Support de module selon l'une quelconque des revendications 1 à 3, **caractérisé en ce que**
- au moins un logement (12), qui reçoit au moins en partie l'au moins un élément d'étanchéité (2a, 2b), est moulé par le premier moulage par injection côté bord, et/ou
- au moins une interface (13) pour la fixation d'un haut-parleur au niveau du support de module (1) et/ou un bossage de vis (10d) est moulée par le premier moulage par injection côté bord et/ou
- au moins une ouverture traversante (100b, 100g) pour le passage d'un câble ou d'une tringlerie à travers le support de module (1) et/ou une ouverture traversante (100g) pour le montage d'un lève-vitre au niveau du support de module (1) est moulée dans le premier moulage par injection côté bord.

5. Support de module selon l'une quelconque des revendications précédentes, **caractérisé en ce que**
- une interface (10a - 10c, 10aa, 10bb, 10cc) pour la fixation d'un rail de guidage (FS1, FS2) d'un lève-vitre et/ou
- une interface (10f) pour la fixation d'un entraînement (M) d'un lève-vitre et/ou
- une interface (14) pour la fixation d'un appareil de commande et/ou
- une interface (17a) pour la fixation d'un capteur d'airbag et/ou
- une interface (17b) pour la fixation d'une poignée de porte et/ou
- une interface (18a, 18b) pour la fixation d'un élément de renvoi (SR), par le biais duquel un moyen de traction (Z) d'un lève-vitre est renvoyé, et/ou
- une paroi antibruit (190)
est moulée par le deuxième moulage par injection prévu dans la zone centrale.

6. Support de module selon l'une quelconque des revendications précédentes, **caractérisé en ce qu'**une ouverture traversante (100a-100f) pour le passage d'un câble, d'une tringlerie et/ou d'un arbre d'entraînement d'un entraînement (M) pour un lève-vitre à travers le support de module (1) et/ou une ouverture traversante (100g-100h) pour un outil de montage d'un lève-vitre au niveau du support de module (1) est moulée par le deuxième moulage par injection prévu dans la zone centrale.

7. Support de module selon l'une quelconque des revendications précédentes, **caractérisé en ce qu'**au moins une section (FP1, FP2) d'un rail de guidage (FS1*, FS2*) d'un lève-vitre est moulée par le deuxième moulage par injection prévu dans la zone centrale.

8. Support de module selon la revendication 7, **caractérisé en ce qu'**un profil de guidage (FP1, FP2) du rail de guidage (FS1*, FS2*), par le biais duquel une voie de guidage est prédéfinie pour un élément d'entraînement (M1, M2) guidé de manière mobile au niveau du rail de guidage (FS1*, FS2*), est réalisé par l'au moins un deuxième moulage par injection.

9. Support de module selon la revendication 8, **caractérisé en ce que** le profil de guidage (FP1, FP2) est moulé par injection au niveau d'un profil de stabilité (S1, S2) du rail de guidage (FS1*, FS2*), qui est aménagé pour recevoir des forces apparaissant lors du fonctionnement du lève-vitre et qui est réalisé par un socle allongé (S1, S2), en saillie au niveau du support de module (1), en tôle organique (O).

10. Support de module selon l'une quelconque des revendications précédentes, **caractérisé en ce que**
- au moins une section d'un rail de guidage (FS1*, FS2*) est réalisée en tant qu'élément fonctionnel du support de module (1) par un socle allongé (S1, S2), en saillie au niveau du support de module (1), en tôle organique (O) ou un socle allongé, en saillie au niveau du support de module (1), en tôle organique (O) définit une interface pour la fixation du rail de guidage (FS1, FS2) et
- le socle (S1, S2) fait saillie sur un premier côté du support de module (1) et définit un canal allongé (K1, K2) sur un deuxième côté opposé du support de module (1).

11. Support de module selon la revendication 10, **caractérisé en ce qu'**au moins une structure d'appui ou de rigidification (11) est réalisée pour l'augmentation locale de la résistance et/ou rigidité dans le canal allongé (K1, K2) sur le deuxième côté du support de module (1) par l'au moins un deuxième moulage par injection prévu dans la zone centrale.

12. Support de module selon la revendication 11, **caractérisé en ce qu'**au moins une partie du matériau plastique thermoplastique de la structure d'appui ou de rigidification (11) est moulée par injection à travers la tôle organique (O) du support de module (1).

13. Support de module selon les revendications 7 et 12, **caractérisé en ce que** la structure d'appui ou de rigidification (11) est reliée au moins en partie directement au matériau plastique thermoplastique moulé par injection pour une section (FP1, FP2) du rail de guidage (FS1*, FS2*) au moyen d'au moins un moulage par injection local à travers la tôle organique (O) du support de module (1).

14. Support de module selon l'une quelconque des revendications précédentes, **caractérisé en ce qu'**une paroi (102) du support de module (1), qui est adjacente à une interface réalisée en matériau plastique thermoplastique moulé par injection pour la fixation d'un haut-parleur, est réalisée de sorte que cette paroi (102) s'étend au moins par section sous la forme d'un coude d'un plan principal du support de module (1), le long duquel le support de module (1) s'étend sensiblement à plat, en direction d'une interface (10cc) formée en matériau plastique thermoplastique moulé par injection pour la fixation d'un rail de guidage (FS1) et forme une structure d'appui pour l'appui de l'interface (10cc) pour la fixation du rail de guidage (FS1).

15. Procédé de fabrication d'un support de module pour un module de porte d'une porte de véhicule automobile, en particulier d'un support de module selon l'une quelconque des revendications 1 à 28, dans lequel au moins un élément fonctionnel (FS1, FS1*, FS2, FS2*, M, Z) doit être fixé au niveau du support de module (1) et dans lequel le support de module (1) est formé pour l'essentiel par une tôle organique (O) et est délimité par un bord extérieur périphérique avec au moins un élément d'étanchéité (2a, 2b), et dans lequel au niveau du support de module (1)
- une pluralité d'interfaces (15 ; 10a-10f, 10aa, 10bb, 10cc, 13-14, 16, 17a, 17b, 18a, 18b, 19, 101) sont prévues d'un côté pour la fixation du support de module (1) au niveau d'une structure de porte (5) d'une porte de véhicule automobile et d'un autre côté pour la liaison de l'au moins un élément fonctionnel (FS1, FS1*, FS2, FS2*, M, Z) et/ou d'autres composants du module de porte (T) au support de module (1),
**caractérisé en ce que**
- au moins un premier moulage par injection en matériau plastique thermoplastique, qui borde au moins en partie une zone centrale du support de module (1) et qui définit au moins une interface (15) pour la fixation du support de module (1) au niveau d'une structure de porte (5) d'une porte de véhicule automobile et/ou pour la fixation d'un autre composant de la porte de véhicule automobile au niveau du support de module (1) et/ou reçoit ou réalise un élément d'étanchéité (2a, 2b) du support de module (1) côté bord, est prévu au niveau du bord extérieur du support de module (1), dans lequel un bord (R) de la tôle organique (O) est surmoulé avec un matériau plastique thermoplastique de sorte qu'une section (A1-A5) complétant la tôle organique (O) et codéfinissant la surface du support de module (1), qui réalise une zone du bord extérieur du support de module (1), dans laquelle il n'y a pas de tôle organe (O), est formée au-dessus du premier moulage par injection en matériau plastique thermoplastique, et
- au moins un deuxième moulage par injection en matériau plastique thermoplastique au niveau du support de module (1), qui définit une interface (10a-10f, 10aa, 10bb, 10cc, 14, 17a, 17b, 18a, 18b) pour un élément fonctionnel (FS1, FS2, M, Z) à fixer au niveau du support de module (1) et/ou une ouverture traversante (100a-100h) et/ou qui réalise au moins une section d'un élément fonctionnel (FS1*, FS2*), est prévu au moins dans la zone centrale du support de module (1).
